# EUROPEAN PATENT APPLICATION

(11) **EP 4 730 292 A1**
(43) Date of publication of application: **22.04.2026**
(21) Application number: 24822914.8
(22) Date of filing: 07.06.2024
(51) Int. Cl.: G07G 1/12, G07G 1/00

(54) **INFORMATION PROCESSING DEVICE, INFORMATION PROCESSING SYSTEM, AND COMPUTER PROGRAM**

(30) Priority: 16.06.2023 JP 2023098913; 16.06.2023 JP 2023098914
(71) Applicant: Teraoka Seiko Co., Ltd., Tokyo 146-8580 (JP)
(72) Inventor: KATO, Satoshi, Tokyo, 146--8580 (JP)
(74) Representative: Osha BWB
(86) International application number: PCT/IB2024/055594
(87) International publication number: WO 2024/256938

(57) **Abstract**

This information processing device comprises: an imaging means that captures an image of a product; an extracting means that uses the image of the product captured by the imaging means as a basis for extracting candidate products to which a training image is to be added by referring to a product information storage means storing product information; a designation reception means that receives a designation of a product to which the training image is to be added and registered from among the candidate products extracted by the extracting means; and a registering means that registers the image of the product captured by the imaging means as the training image in the product information storage means, in association with the product designated in the designation reception means.

## Description

### Technical Field

The present invention relates to an information processing device, an information processing system, and a computer program.

### Background Art

Art of so-called object scanning is known in which a standard image of an article obtained by capturing an article and a learning image serving as a reference image for image recognition are compared to identify the article.

For example, Patent Document 1 discloses an article distinguishing device provided with a tray on which an article is placed, a backlight source that illuminates from a bottom surface side of the tray using a backlight, a digital camera that captures the article on the tray, and a distinguishing computer that performs image recognition of the image from the digital camera and distinguishes the article. This article distinguishing device extracts the article on the tray from a difference image between an image taken when the backlight source is on and an image taken when the backlight source is off.

Furthermore, for example, Patent Document 2 discloses a product recognition device provided with: a storage unit that pre-stores an image database in which at least learning image information and product names are corresponded for a plurality of products; a learning unit that performs machine learning using the learning image information and product names stored in the image database to generate a taught distinguishing engine; and a distinguishing unit that uses the distinguishing engine to distinguish the product name of a target product based on image information of the target product.

### Prior Art Documents

### Patent Documents

Patent Document 1: JP 2017-162217 A
Patent Document 2: JP 7125179

In this regard, image learning for object scanning involves capturing an article for each target product and designating the article and registering the image each time, which is extremely tedious.

Furthermore, when performing an object scan of a for-purchase product in a store such as a supermarket, when all products registered in predetermined storage means are targets of object scanning, there is a possibility that a product not currently on sale will be extracted. Therefore, it is necessary to search for a target product from predetermined storage means and set whether or not to make it for sale. However, it is cumbersome and tedious to search for and set up each target product.

### Summary of Invention

Therefore, one object of the present invention is to provide a device that can easily register a learning image to be used in object scanning.

Another object of the present invention is to provide a device that can easily perform for-sale setting of a product.

In order to achieve the above objects, the information processing device according to the present invention is provided with capture means for capturing a product, extraction means for extracting a product candidate to which a learning image is to be added by referencing product information storage means for storing product information based on the image of the product captured by the capture means, designation reception means for receiving a designation of a product to which the learning image is to be added and registered from product candidates extracted by the extraction means, and registration means for registering the image of the product captured by the capture means as the learning image in association with the product designated in the designation reception means.

Furthermore, in order to achieve the above objects, the information processing device according to the present invention is provided with capture means for capturing a product, extraction means for extracting the product candidate corresponding to the image of the product captured by the capture means by referencing product information storage means that store product information based on the image of the product captured by the capture means in a predetermined operation mode in which an operation for purchasing the product is performed, and setting means for setting the product extracted by the extraction means in the predetermined operation mode as a for-sale product or a not-for-sale product.

### Brief Description of Drawings

FIG. 1 is a configuration diagram illustrating a configuration of system provided with a weighing device according to an embodiment of the present invention.
FIG. 2 is a functional block diagram illustrating a hardware configuration of the weighing device according to an embodiment of the present invention.
FIG. 3 is a functional block diagram illustrating a software configuration of the weighing device according to an embodiment of the present invention.
FIG. 4 is one example of a screen displayed on the weighing device according to an embodiment of the present invention, and illustrates a standby screen in a first operation mode.
FIG. 5 is one example of a screen displayed on the weighing device according to an embodiment of the present invention, and illustrates a screen that designates a product in the first operation mode.
FIG. 6 is one example of a screen displayed on the weighing device according to an embodiment of the present invention, and illustrates a screen that designates a product in a second operation mode.
FIG. 7 is one example of a screen displayed on the weighing device according to an embodiment of the present invention, and illustrates a screen that designates a product in a third operation mode.
FIG. 8 is one example of a screen displayed on the weighing device according to an embodiment of the present invention, and illustrates a screen that designates a product in a fourth operation mode.
FIG. 9 is one example of processing by the weighing device according to an embodiment of the present invention, and is a processing flow diagram illustrating an entire process in the first operation mode.
FIG. 10 is one example of processing by the weighing device according to an embodiment of the present invention, and is a processing flow diagram illustrating a process that extracts an item of a product within the process in the first operation mode.
FIG. 11 is one example of processing by the weighing device according to an embodiment of the present invention, and is a processing flow diagram illustrating an entire process in the second operation mode.
FIG. 12 is one example of processing by the weighing device according to an embodiment of the present invention, and is a processing flow diagram illustrating an entire process in the third operation mode.
FIG. 13 is one example of processing by the weighing device according to an embodiment of the present invention, and is a processing flow diagram illustrating an entire process in the fourth operation mode.

### Embodiments of Invention

### • System configuration

The information processing device according to an embodiment of the present invention will be described with reference to the drawings.

Note that in the following description, unless otherwise specified, functional units, processes, etc. that are assigned the same symbols as those assigned to functional units, processes, etc. already described will be assumed to be configured in a similar way to the functional units, processes, etc. already described, and description thereof will be omitted.

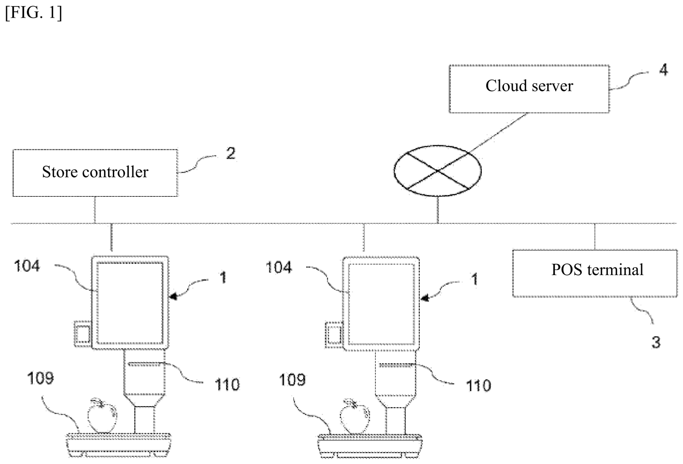

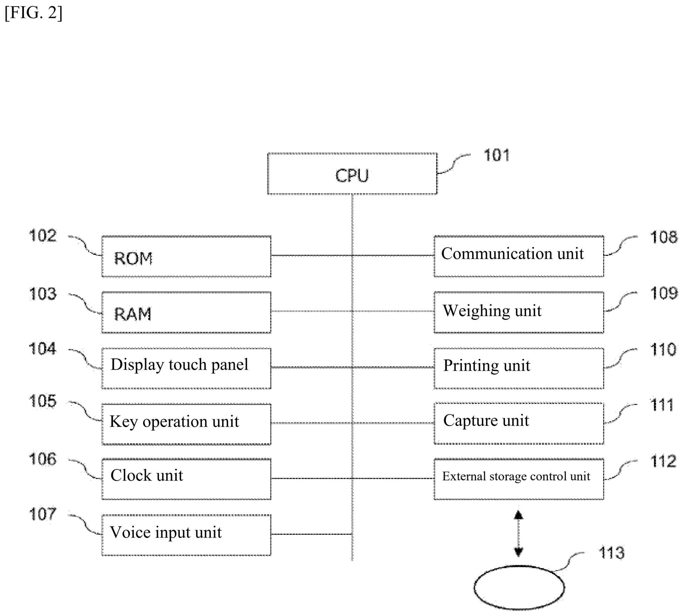

FIG. 1 illustrates an example of a configuration of a system provided with a weighing device 1 according to the present embodiment, and FIG. 2 illustrates a hardware configuration of the weighing device 1. The weighing device 1 according to the present embodiment is an embodiment of an information processing device according to the present invention.

The weighing device 1 is, for example, provided in a supermarket that sells fresh foods such as vegetables and fruits. In a fresh food section of the supermarket, products such as vegetables and fruits that are sold individually are divided by type and exhibited in their respective exhibit areas.

Since each product is sold individually, there are no labels attached on which a price or barcode is printed. A customer or clerk weighs only a necessary amount of each type of product and receives issuance of a label of the product for an amount to be purchased the from the weighing device 1. The customer or clerk attaches the label to the product. A symbol code including information such as price is printed on the label, and the symbol code may be read by a POS terminal 3 to register the product in the POS terminal 3 or the like as a for-purchase product.

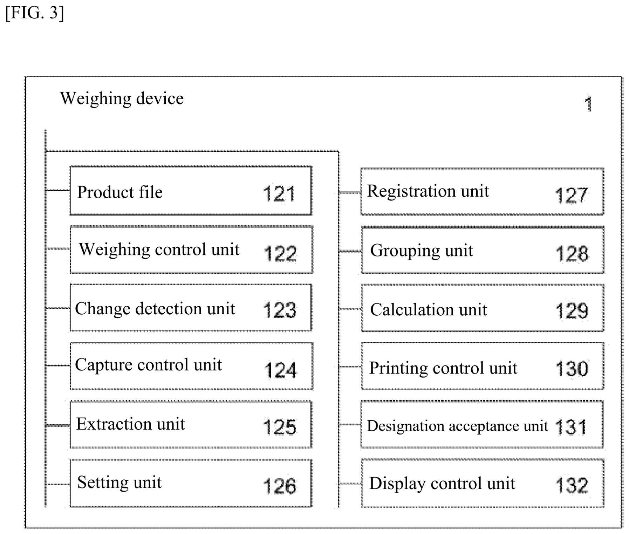

The weighing device 1 displays a list of designatable products on a screen of a display touch panel 104 and receives designation of products to be purchased from an operator such as a customer or a clerk. Furthermore, the weighing device 1 weighs the weight of the product placed on a weighing unit 109, and retrieves product data such as the unit price of the product designated by the operator on the display touch panel 104 from, for example, a storage unit such as RAM 103, calculates the price of the product, and issues the label. In particular, the weighing device 1 according to the present embodiment executes an object scan of a product selected by the customer or clerk, and designatably presents the product candidate to the customer or clerk. Note that the term "object scan" here refers to a process of capturing a product and performing image recognition of the product, and identifying the product by comparing it with the learning image, and is executed by a capture control unit 124 and extraction unit 125 (see FIG. 3), which will be described later.

Note that some or all of the product data, such as a product file 121 (see FIG. 3) described later, may be saved not only in a storage unit provided in the weighing device 1 main body such as the RAM 103, but also in an appropriate configuration connected by wire or wirelessly. In particular, the learning image and learning data for object scanning, which will be described later, do not need to be stored in the weighing device 1 main body, but may be stored, for example, in a higher-level store controller 2 or cloud server 4, and the weighing device 1 may reference them.

The store controller 2 is a computer that manages various data within the supermarket, and is connected to the weighing device 1 and the POS terminal 3 by a LAN (Local Area Network). The various types of data include, for example, a product file that stores information such as product selling prices stored by the POS terminal 3, the product file 121 (see FIG. 3) described below that is stored by the weighing device 1, and a performance file transmitted from the POS terminal 3, or the like.

The POS terminal 3 is a so-called POS register, and performs operations such as product registration and settlement of the product to be purchased by the customer (including fresh foods weighed by the weighing device 1 as well as products with pre-labeled items). Printed on the label of a product is a product distinguishing number such as a product code, and in the case of labels issued by the weighing device 1, price information and the like according to weight in the form of a barcode or two-dimensional code, and the POS terminal 3 is provided with a reading device that reads these barcodes and two-dimensional codes. The POS terminal 3 then performs registration processing of the product based on information of the barcode or two-dimensional code read by the reading device and information such as the product selling price stored in the memory.

Note that regardless of the illustration, a plurality of the POS terminal 3 may be provided in the store. Furthermore, the POS terminal 3 may be a self-service terminal operated by the customers themselves, in addition to a terminal operated by the clerk.

The cloud server 4 is a device that executes a process executed by a device in the store including the weighing device 1 and holds data necessary for the process, and is provided as appropriate. In the present embodiment, object scanning of the product is performed at the weighing device 1, but the weighing device 1 may only capture the product, and a process of recognition of analysis of the image may be made to be performed by the cloud server 4. Furthermore, the cloud server 4 may be configured so that data for comparison (learning image) is generated using deep learning by AI (artificial intelligence), thereby improving the accuracy of object scanning.

Note that the store controller 2 and the cloud server 4 configure a higher-level management device of the weighing device 1 and the POS terminal 3. Regardless of the present embodiment, the higher-level device may be configured by one terminal or device, or may be configured by another terminal or device different from the cloud server 4. Furthermore, the higher-level device may be a terminal or device within the store that is connected to a network such as a LAN, or may be a terminal or device outside the store that is connected to a network such as the Internet.

### • Hardware configuration of weighing device 1

FIG. 2 illustrates a hardware configuration of the weighing device 1, and FIG. 3 illustrates a software configuration of the weighing device 1.

As illustrated in FIG. 2, the hardware configuration of the weighing device 1 is configured from a CPU 101, a ROM 102, the RAM 103, the display touch panel 104, a key operation unit 105, a clock unit 106, a voice input unit 107, a communication unit 108, the weighing unit 109, a printing unit 110, a capture unit 111, and an external storage control unit 112.

The CPU 101 is a central processing unit that controls the operation of the weighing device 1, and by reading and executing a program from the ROM 102, realized operation of the weighing device 1 in accordance with the program. The ROM 102 is a read-only memory and stores the above program. The RAM 103 is a read/write memory that stores the product file 121 described later, an icon table, and other temporary data and the like.

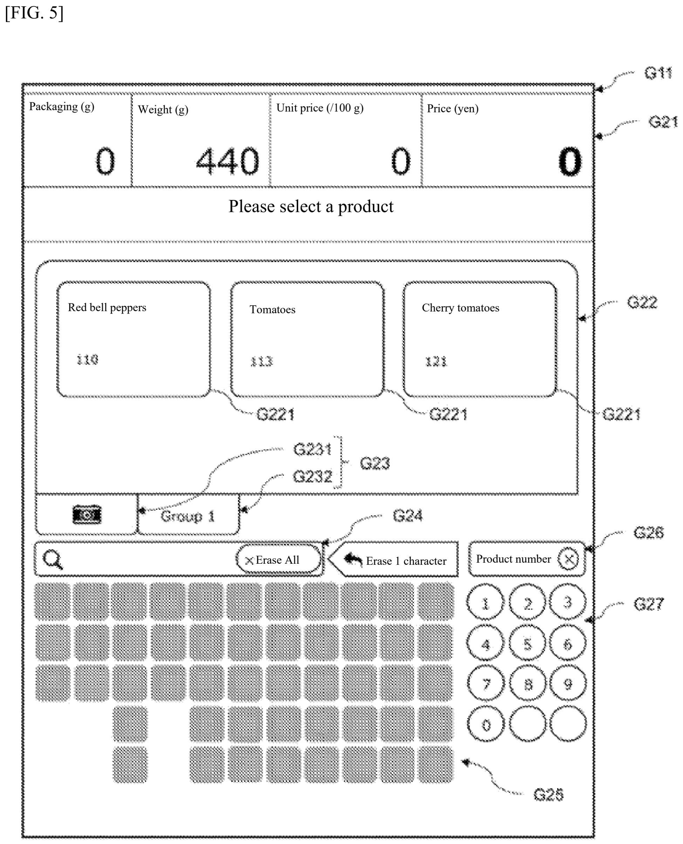

The display touch panel 104 is a user input/output interface with an operator such as the customer operating the weighing device 1, and displays a preset key G221 (see FIG. 5, etc.) for designating the product to be weighed and various other information on a screen, and receives designation input from the operator using the displayed preset key G221. An example of the screen display of the display touch panel 104 will be described later. Furthermore, the data of the product corresponding to the preset key G221 designated by the operator from the screen is read from the product file 121 in the RAM 103, and the price of the product is calculated.

The key operation unit 105 is used to perform input other than that performed on the display touch panel 104.

The clock unit 106 outputs time information. This time information is used to control a display aspect of the preset key G221 (see FIG. 5, etc.) displayed on the display touch panel 104.

The voice input unit 107 is for performing voice input, and allows the operator to input product information by voice.

The communication unit 108 is a LAN interface and controls communication with the store controller 2. The product file 121 is acquired from the store controller 2 via this communication unit 108. The program may be transferred from the store controller 2 to the weighing device 1 via the communication unit 108. The transferred program may be stored in the RAM 103, for example.

The weighing unit 109 measures the weight of the product placed on a weighing tray provided on a top of the weighing device 1 main body using a mass detection method using a load cell or the like, and outputs the weighed value. More specifically, the weighing unit 109 is configured by a weight detection unit and an A/D converter, and the A/D converter converts an analog signal input from the mass detection unit into a digital signal.

The printing unit 110 configures an issuing unit that issues labels on which a price, barcode, etc. are printed for the products weighed by the weighing unit 109. This label is printed based on the weighed value output as a weighing result from the weighing unit 109 and the product information (such as unit price data) relating to the product in the product file stored in the RAM 103.

In the present embodiment, the label is a sticker that may be attached to the product or a bag containing the product. Furthermore, in the present embodiment, the information required for settlement of the product is printed on the label and issued, but this is not limiting, and the information may be printed, etc. on a bag containing the product, for example.

The capture unit 111 is a device that captures the product placed on the weighing unit 109, and is configured by, for example, an image sensor such as a color CCD image sensor or a color CMOS image sensor. There may be any number of the capture unit 111, and a plurality may be provided. For example, the capture unit 111 may be disposed facing at different angles so that the article placed on the weighing unit 109 may be captured from a plurality of angles.

A portable storage medium 113 such as a DVD-ROM or a USB memory is connected to the external storage control unit 112. The portable storage medium 113 stores information including a program, and the external storage control unit 112 reads and writes the information.

### • Software configuration of weighing device 1

As illustrated in FIG. 3, in a software configuration of the weighing device 1, the above-mentioned arithmetic unit such as the CPU 101 and storage unit such as the RAM 103 configure functional blocks including the product file 121, a weighing control unit 122, a change detection unit 123, the capture control unit 124, the extraction unit 125, a setting unit 126, a registration unit 127, a grouping unit 128, a calculation unit 129, a printing control unit 130, a designation reception unit 131, and a display control unit 132. Note that some or all of the functional units may be realized in a higher-level device such as the store controller 2 connected by wire or wirelessly, or in the cloud server 4 connected via the Internet, etc.

Here, the weighing device 1 is mainly switched between first to fourth operation modes, and executes functions according to each operation mode. Note that the first operation mode is an operation mode used when providing a service to the customer, whereas the second to fourth operation modes are so-called maintenance modes in which product information is set, and the screens displayed in these maintenance modes can be said to configure maintenance screens.

The first operation mode is an operation mode in which the customer performs an operation to purchase a product or make a transaction. In the present embodiment, the first operation mode is an operation mode for performing weighing and pricing of the product, in which the product placed on the weighing unit 109 as the for-purchase product is weighed and a label displaying a price is issued. Note that in another embodiment, when the weighing device 1 is provided with a function of the POS terminal 3 or when the information processing device according to the present invention is configured as the POS terminal 3, in this first operation mode, product registration is performed in which the product is weighed and registered as the for-purchase product. Furthermore, although the weighing device 1 according to the present embodiment performs weighing and pricing, it may be configured as a device that only performs weighing, with pricing being configured to be performed by another linked device.

The second operation mode is a mode that registers the learning image of the product. In this second operation mode, an image of the product captured by the capture unit 111 is registered as the learning image of the product.

The third operation mode is a mode that sets the product as a for-sale product or a not-for-sale product. In this third mode, it is possible to set whether the store will handle the product registered in the product file 121 as the for-sale product or as the not-for-sale product. Such setting is necessary due to seasonally released products and inventory availability, as will be described later.

The fourth operation mode is a mode that performs grouping of products. In this fourth operation mode, a plurality of types of products that are commonly associated with a predetermined learning image are registered as one group.

Note that in the following description of each functional unit, a function for which no particular mode is mentioned is performed in common to all modes.

### <Product File 121>

The product file 121 is a file that stores product information for each product to be weighed by the weighing device 1, composed of a product code, product name, classification, preset key name, image for the preset key, weight (mass), unit price, color of product, learning image, group information, and for-sale setting, which configure product distinguishing information, and configure product information storage means.

Note that the product file 121 may also register a barcode division (in-store barcode system), cost, unit weight, packaging, and the like. The product file 121 may also be created by the store controller 2 or the cloud server 4, and transmitted to the weighing device 1 and stored in the RAM 103. However, this does not prevent the weighing device 1 from creating the product file 121 in other embodiments. Furthermore, the selling price may be updated at least once a day, or the like, or at another predetermined timing.

The barcode division sets a division related to a PLU code such as a JAN (EAN) code, and a barcode system (types) when an in-store barcode is used for a product sold by weight.

The product code is product distinguishing information and is also called a product number.

The product name is a name of the product and is set for search purposes.

The classification is a category (item) according to a property of each product. By classifying and registering each product into a predetermined classification, when a predetermined classification tab is selected, products belonging to the predetermined classification are narrowed down.

The preset key name is the product name or the like that is displayed attached to the preset key G221 (see FIG. 5, etc.), and when no name is entered, a general name of the product is set.

The image for the preset key is an image used when displaying the preset key G221 for receiving a designation of the product. The image for the preset key displays a design, photographic image, text information, etc. that allow the user to understand the product.

Data of the unit weight is a value set as an average value per product, and is data used to calculate a number of the product from the weighed value measured by the weighing device 1. This weight data may also be used to determine whether a plurality of the product is placed on the weighing unit 109. Therefore, this data is, for example, set only for a product sold by number of pieces, such as apples. For a product not sold by number of pieces, for example, a product sold by gram such as meat, the price is calculated using only data of the unit price (gram unit price). Data of the unit price is set as an amount per piece for a product sold by number of pieces, and, for example, as an amount per 100 grams for a product sold by gram. Note that in order that apples and the like may be sold by the gram, it may configured so that settings of "sold by gram" and "sold by number of pieces" as a selling division or the like are possible. In the case of "sold by number of pieces," a transaction amount is calculated according to the setting of the unit weight. The unit weight may be registered by inputting a number or registered by the weighed value. Furthermore, when a plurality of the product is weighed, the number of pieces placed on the weighing tray may be input, and an average weight obtained by dividing based on the number of pieces may be stored.

The color of the product is designated as a color corresponded with the product. For the color of the product, any one or a plurality of colors may be registered so as to accommodate various recognitions of the color of the product.

The learning image is an image of the product, and serves as a standard image to be referenced when recognizing and identifying the product in the captured image by object scanning and extracting a product candidate from the product file 121. The learning image may be registered by capturing the actual product using the capture unit 111, and may also be registered by reading capture data captured in advance. For example, the product code may be designated, and the learning image of target products captured and registered in sequence. Furthermore, a plurality of learning images may be registered for one product. Furthermore, a new learning image may be automatically generated from an already registered learning image using AI deep learning and then registered.

The group information is information that defines a group of products in which images of the products captured by the capture unit 111 are associated as learning images. That is, for products that are set in a predetermined group, the learning image of one product that belongs to the predetermined group is also associated with another product that belongs to the predetermined group. For example, when there are "apples" which in terms of variety of fruit are the same product, but in terms of products to be sold, are "apples" of a different region or brand, when these are grouped, "apples" from each region or brand are treated as belonging to the same group, regardless of a difference of region or brand. As will be described later, when the learning image is associated with one product belonging to the same group, the same learning image is also associated with products other than the one product belonging to the same group.

The for-sale setting is information indicating whether the store handles as the for-sale product or as the not-for-sale product, and is set by the setting unit 126 described later. Some of the products handled by the weighing device 1, that is, products registered in the product file 121, are seasonal or are products which are not available year-round. Therefore, it is not appropriate to display a product that is not currently on sale on the screen when weighing, and excluding such being a target of object scanning improves the accuracy of the object scan. This for-sale setting may be performed for each product called up by calling up a predetermined product from a list of products by a product number call-up, but in the present embodiment, may be performed by designating a predetermined product from the product candidates extracted by an extraction processing unit using the setting unit 126 described later.

Note that the for-sale setting is not limited to an example in which an operator designates the product and sets it as the for-sale product or the not-for-sale product, but may also be configured so that the product may be set to be automatically treated as the for-sale product or the not-for-sale product according to a pre-set period or the like. For example, in a manner similar to providing period setting for a special sale period for a special sale promotion of the product, a sale period may be set for the product, such as from one predetermined date to another predetermined date, and the product may be treated as the for-sale product or the not-for-sale product according to whether a date and time of use of the weighing device 1 falls within the sales period. That is, the sale period is set for the product in the product file 121, and the weighing device 1 acquires calendar information stored in the device itself or in any external terminal when the power is turned on. By referring to the calendar information, it is determined whether or not the current date and time for a predetermined product falls within the sale period, and if it falls within the sale period, the predetermined product is treated as the for-sale product, and if it does not fall within the sale period, the predetermined product is treated as the not-for-sale product.

The sale period may also be set by season. For example, in the product file 121, the season in which the product is treated as the for-sale product is set, and a separate season master that corresponds a date and season is provided separately. The weighing device 1 determines the season of the day by referencing the season master, and then sets the product as the for-sale product or the not-for-sale product.

Here, the season set for the product is not limited to any one of spring, summer, autumn, or winter, and setting overlapping seasons such as spring and summer or autumn and winter is possible. In this case, the product may be treated as the for-sale product as long as it falls under one of the overlapping seasons, or in one of the seasons among set seasons, the operator may be allowed to select from a pop-up screen whether treat as the for-sale product or the not-for-sale product, or the like. The season master may also perform association of location information of the store where the weighing device 1 is set and the season. In this way setting of the season may be reflected according to the location, such as spring in Hokkaido and summer in Okinawa for the same date and time.

Note that seasonal for-sale setting may be made able to be switched on and off by any operation such as a predetermined button, whereby it is possible to set whether to reflect seasonal for-sale setting on the product on that day. The season master provide the product file 121 with a division and reference this.

Setting of the sale period may be set on a monthly basis. For example, in the product file 121, a flag may be set for the product to indicate whether to treat as the for-sale product in a predetermined month. The weighing device 1 determines the month of the day based on the date of the day, and then sets the product as the for-sale product or the not-for-sale product according to the flag.

Note that setting of the sale period is provided with both the seasonal setting and setting on a monthly basis described above, and may be configured so that the operator may selectively set any of these.

### <Weighing Control Unit 122>

The weighing control unit 122 controls the weighing unit 109 to measure a weight of the product placed on the weighing tray of the weighing unit 109.

### <Change Detection Unit 123>

The change detection unit 123 is a functional unit that detects that the weight on the weighing tray measured by the weighing unit 109 has changed. The change detection unit 123, for example, detects that the weight has changed by a predetermined value or more within a predetermined time period, and determines that the weight has changed. The change detection unit 123 may also calculate a change amount in the weight of the product weighed by the weighing unit 109, and determine that the weight has changed when the change amount is equal to or greater than a predetermined amount. The change detection unit 123 may also calculate the change amount of the weight as one aspect of a change in weight, and detect that the weight is fluctuating. The change detection unit 123 may also detect whether the weight being weighed is stable. A state in which the weight is stable refers to a state in which a weight value of the product measured by the weighing unit 109 is within a predetermined threshold value for a predetermined short period of time, for example.

When this change detection unit 123 detects a weight change of the weighing unit 109, it is assumed that the product has been placed on the weighing unit 109, and processing is started from capturing of the product by the capture unit 111 to extraction of the product by the extraction unit 125.

### <Capture Control Unit 124>

The capture control unit 124 controls the capture unit 111 to capture the product placed on the weighing unit 109. The capture control unit 124 may start capture for object scanning when the change detection unit 123 detects a weight change of the weighing unit 109, or may start capture for object scanning when the weight of the product weighed by the weighing control unit 122 is within a transaction weighing range. For example, a weight of 20 or more scale divisions from the minimum scale is treated as a weight for transaction. Furthermore, an operation for object scanning may be started in response to any operation of the operator.

### <Extraction Unit 125>

The extraction unit 125 is a functional unit that extracts information of the product from the product file 121, and, for example, extracts the product candidate from the product file 121 that corresponds to the image of the product captured by the capture unit 111, or extracts information of the product from the product file 121 according to a search such as product number search.

The extraction unit 125 recognizes the product in the image captured by the capture unit 111 in a so-called object scan using appropriate image analysis art or general object recognition art. Note that in recognition of the product, general object recognition may be performed by dividing an image into regions for each object. A number of the product or number of types of the product placed on the weighing unit 109 may also be identified.

The extraction unit 125 uses the learning image associated with each product in the product file 121 as a standard image, compares the standard image with the image of the product in the captured image recognized by object scanning, and calculates a degree of similarity. The degree of similarity, for example, indicates how similar the image of all or a part of the product are when the learning image of each product stored in product file 121 is taken as 100% = "degree of similarity: 1.0." Then, the extraction unit 125 extracts a plurality of the product from the product file 121 in order of degree of similarity, for example, as product candidates corresponding to the captured image of the product. Information related to the extracted product candidates is passed to the display control unit 132.

Since a plurality of the product is extracted as candidates, there is a high possibility that an appropriate product is extracted. As a result, the operator is not forced to perform an extraction process again because a suitable product candidate is not extracted. In particular, when the customer is the operator, a redoing operation is difficult to understand, and an increase in workload of operations is inconvenient, so it is useful to have a plurality of product candidates extracted.

Note that the extraction unit 125 may calculate the degree of similarity between the captured image of the product and the learning image of each product registered in the product file 121 as an absolute evaluation or as a relative evaluation.

Furthermore, regarding the extraction of a plurality of the product in order of degree of similarity, various extraction aspects may be set. For example, when the degree of similarity of the product of the highest similarity is lower than a predetermined value, three products may be extracted as candidates in order of descending degree of similarity. Furthermore, when the degree of similarity of the product of the highest similarity is 70% and there is a plurality of the product within a range of degree of similarity of 5% less than that (65%), all products within that range may be extracted as candidates. Moreover, it is also possible to set so that when there is a not-for-sale product having a higher degree of similarity than the product among for-sale products having the highest degree of similarity, or when there is a not-for-sale product in a range of ±3% of the product having the highest degree of similarity, then that not-for-sale product is extracted as a candidate.

Furthermore, the extraction unit 125 may, for example, start the extraction process in response to a fluctuation in weight without waiting for the weight of the weighed product to stabilize, or may start the extraction process in the event a fluctuation in weight is detected. Furthermore, the extraction process for the product may be performed when the weight weighed by the weighing control unit 122 is stable.

Furthermore, in the object scan, the extraction unit 125 may identify the color of the product from the captured image of the product and compare with the registered color of the product to identify a product of a similar shade. The extraction unit 125 may use shade as one of index of the degree of similarity, and a product candidate in which a product of a similar shade is captured may be used. Note that the color of the product may be registered in advance in the product file 121 in addition to an aspect in which it is identified from the image. The degree of similarity of shade may, for example, be calculated using elements of hue, brightness, or saturation, or a combination thereof, or any other appropriate art such as calculation by projecting onto a coordinate system may be employed.

Furthermore, the extraction unit 125 may function as follows, particularly in each operation mode.

In the first operation mode, the extraction unit 125 references the product file 121 based on the image of the product captured by the capture unit 111, and extracts the product candidate captured by the capture unit 111, that is, the product candidate placed on the weighing unit 109 as the for-purchase product. In this case, the extraction unit 125 may first extract the product candidate corresponding to the captured image of the product from the products set as for-sale products. Normally, the not-for-sale product would not be exhibited, so by setting only the not-for-sale product as a target for extracting the product candidate, accuracy of extracting appropriate candidates is increased. On the other hand, when the product cannot be extracted from the products set as for-sale products, the product candidate corresponding to the captured image of the product may be further extracted from the products set as not-for-sale products.

In the second operation mode, the extraction unit 125 references the product file 121 based on the image of the product captured by the capture unit 111, and extracts the product candidate to which the learning image is to be added. In this case, the extraction unit 125 may extract the product candidate corresponding to the image captured by the capture unit 111 from both products set as for-sale products and products set as not-for-sale products, that is, from all products regardless of the for-sale setting. Furthermore, when it is not possible to extract the product candidate to which the learning image is to be added based on the image captured by the capture unit 111, the product for which a learning image is not registered in the product file 121, that is, the product to which a learning image is not associated, may be extracted as the product candidate for which the learning image is to be newly registered. Furthermore, when the product candidate cannot be extracted because the learning image has not been registered in association with the product, or because a learning amount is small, that is, there are few learning images associated with the product, a message indicating "not learned" may be displayed on the screen, or the like. Furthermore, the state may be determined, and the operator may be notified such as by displaying a message on the screen indicating a state that there are no learning images registered or that there are few learning images registered.

In the third operation mode, designation of the product may be received from a state in which the product candidate has been extracted in the first operation mode or the second operation mode, but regardless of this, the product candidate for which for-sale setting is to be performed by referencing the product file 121 may be extracted based on the image of the product captured by the capture unit 111, or the product candidate may be extracted according to a product number search, or the like. In this third operation mode, for-sale setting of the product is performed, and therefore the extraction unit 125 extracts the product candidate from among all products regardless of for-sale setting.

In the fourth operation mode, any plurality of products is extracted from all products registered in the product file 121 by a product number search or the like. However, when designating each one of the plurality of products, the product candidate corresponding to the image of the product captured by the capture unit 111 may be extracted, as in the other operation modes.

Note that in any operation mode, in the extraction process by the extraction unit 125, of all products including for-sale products and not-for-sale products, products that do not have an associated learning image for object scanning, that is, products for which a learning image is not registered in the product file 121, may be excluded from the targets of object scanning, that is, from extraction targets.

### <Setting Unit 126>

The setting unit 126 sets whether the product registered in the product file 121 is the for-sale product or the not-for-sale product. Note that in the description of the present embodiment, the setting unit 126 setting the product as the for-sale product or the not-for-sale product is referred to as "for-sale setting."

Here, the setting process by the setting unit 126 is executed in the third operation mode, but may also be executed during execution of the first operation mode. That is, during execution of the first operation mode to register the product as the for-purchase product, the product candidate is extracted by the extraction unit 125, and when a change to the third operation mode is received by any operation of the user in a state in which the product candidate is displayed, the first operation mode is temporarily put into a hold state and the third operation mode is transitioned to. In the third operation mode at this time, setting of the for-sale product or the not-for-sale product may be performed for the product extracted by the extraction unit 125. While an operation is being executed in the third operation mode, the operation that had been performed in the first operation mode until the operation mode changed to the third operation mode is maintained in a valid state, and when the for-sale setting is completed in the third operation mode and the first operation mode is returned to, the operation that has been maintained in a valid state may be continued. Note that as will be described later, a transition from the second operation mode or the fourth operation mode to the third operation mode may be made in the same way as the transition from the first operation mode to the third operation mode.

Note that as described above, operations in the first operation mode that are maintained in a valid state when changing to the third operation mode include, for example, operations and information related to the weighed value of the product and product candidate. However, as a result of changing the for-sale setting in the third operation mode, which is transition to from the first operation mode, there is a possibility that the product to be extracted as a candidate will change depending on the degree of similarity of the product. Therefore, when returning from the third operation mode to the first operation mode, the extraction process by the extraction unit 125 may be executed again. When the extraction process is executed again in this manner, when a change in the for-sale setting results in another new product candidate that should be extracted according to the degree of similarity, this new product candidate may be extracted and displayed in addition to the product candidate that was previously extracted in the first operation mode, or a predetermined number of product candidates may be displayed in order of degree of similarity from the product that was previously extracted and this new product candidate. In any case, in the first operation mode after returning, the results of the new extraction process are reflected in the results of the extraction process in the previous first operation mode, and it can be said that the first operation mode is maintained in a valid state.

However, regardless of this, when returning to the first operation mode again after having transitioned from the first operation mode to the third operation mode, the process results of the previous first operation mode may be erased, and the extraction process by the extraction unit 125 or a series of processing starting from capture may be executed from the beginning.

Furthermore, in the first operation mode, when the extraction unit 125 extracts the product candidate from the product file 121 based on the image of the product captured by the capture unit 111, when the product candidate is extracted from products set as for-sale products and no product candidate is extracted from not-for-sale products, the for-sale setting by the setting unit 126 can also be said to perform a setting (extraction target setting) in the first operation mode as to whether the candidate is set as a target for extraction by the extraction unit 125 for each product.

### <Registration Unit 127>

The registration unit 127 registers the learning image of the product in the product file 121. Specifically, in the second operation mode, the registration unit 127 registers the image of the product captured by the capture unit 111 as the learning image in the product file 121 in association with the product designated by the designation reception unit 131 described later. Here, if the learning image has not yet been registered for the product which is a target for association, a new registration is made, and if the learning image has already been registered, an additional registration is made. Note that a registration destination of the learning image may be a file provided separately from the product file 121, such as a file (storage region) for registering the learning image, as long as the learning image is associated with the product.

Furthermore, when the product for which designation has been received is any one of the products grouped by the grouping unit 128, the registration unit 127 registers the image of the product captured by the capture unit 111 as the learning image in the product file 121 in association with all products grouped with the product designated by the designation reception unit 131.

Note that in an initial stage of registering the learning image, no learning image is registered, and in this initial stage, for example, the product is called up by a product number search or the like, and the image of the product is registered as the learning image. Once registration of learning images has proceeded to a certain extent from the initial stage, it becomes possible to extract the product candidate by object scanning, and simply by designating the predetermined product from the product candidates displayed corresponding to the captured image of the product, the learning image is associated with the product and learning progresses. In this regard, regardless of the progress of learning, in cases such as where the object scan extracts a product candidate that is completely different from the captured product as an extraction result, the captured image of the product is determined to be unsuitable as the learning image, and therefore a cancel button may be provided to "not register" or "skip" the captured image of the product as the learning image, thereby allowing the registration to be canceled. In this case, instead of or in addition to a configuration that provides the cancel button, the process of registering the captured image of the product as the learning image may be canceled when the product is removed from the weighing unit 109 without an operation to designate the product. In this way, unlike when learning images are registered based on product number, it is possible to avoid a situation in which a learning image that will later become a target for deletion as an irregular image is registered. In the first place, as a number of registrations of the learning image increases and accuracy improves, only a product similar to the captured product will be extracted as a candidate, so a captured image of the product having completely different characteristics from the capture target will no longer be associated with the wrong product.

### <Grouping Unit 128>

The grouping unit 128 groups the predetermined product in the fourth operation mode and registers the setting in the product file 121. Note that in the description of the present embodiment, the setting that groups products by the grouping unit 128 may be referred to as "group setting."

### <Calculation Unit 129>

The calculation unit 129 references the product file 121 and calculates the price based on the weighed value and unit price of the product. Note that the calculation unit 129 also executes calculations necessary during sale of the product, such as calculating a tax-inclusive price based on a tax rate of consumption tax or the like.

### <Printing Control Unit 130>

The printing control unit 130 issues a label that reflects information such as the weight weighed by the weighing unit 109 and a price calculated by the calculation unit 129. That is, the printing control unit 130 controls the printing unit 110 to print information necessary for settlement of the product onto the label or the like based on product information related to the product in the product file 121, a weighed value output as a weighing result from the weighing unit 109, a price calculated by the calculation unit 129, and the like.

Note that instead of or in addition to a configuration in which information necessary for settlement of the product is printed on the label, the printing control unit 130 may print onto a bag in which the product is put, or the like. Furthermore, the printing control unit 130 may present the information to be printed to the operator and wait for confirmation input that the presented information is correct before issuing the label, or may issue the label immediately in accordance with generation of the information to be printed without waiting for confirmation input. Furthermore, the information required for settlement of the product may be associated with a recording medium capable of distinguishing a member or transaction, such as an IC tag or a barcode (membership card). Note that before starting weighing or immediately before issuing the label, an input screen for distinguishing information of the recording medium may be displayed to prompt the operator for input.

### <Designation Reception Unit 131>

The designation reception unit 131 is means for indicating the product candidate and receiving a designation from the operator for the product extracted from the product file 121 as the product candidate corresponding to the image of the product captured by the capture unit 111. This designation reception unit 131 is, for example, displayed on a screen operated by an operator and is realized by an operation element provided for each product. This operation element may be displayed, for example, as a preset key G221 (see FIG. 5, etc.) on which product information is displayed, as described below, and this allows the operator to easily understand the product and to designate the product with a simple operation even when a plurality of product candidates are extracted.

In the first operation mode, the designation reception unit 131 receives designation of the product for which the label is to be issued from the product candidates extracted by the extraction unit 125.

In the second operation mode, the designation reception unit 131 receives designation of the product for which the learning image is to be registered from the product candidates extracted by the extraction unit 125. Note that if the learning image has not yet been associated with the designated product, a new registration is made, and if the learning image has already been associated, an additional registration is made.

In the third operation mode, the designation reception unit 131 receives designation of the product for which the setting of for-sale product or not-for-sale product is to be switched from the product candidates extracted by the extraction unit 125. In this third mode, the setting of the product may be switched between the for-sale product or the not-for-sale product according to reception of an operation designating the product.

In the fourth operation mode, the designation reception unit 131 receives designation of the product to be grouped from the product candidates extracted by the extraction unit 125. Note that in the fourth operation mode, a plurality of the product may be designated from the product candidates, and then an operation to request registration may be executed to request grouped registration. In this case, it may be possible to select or deselect the product according to designation of the product until an operation requesting registration is executed. Furthermore, the operation to request registration may be performed in various aspects, such as by pressing a separately provided button on the screen or a completion key of mechanical keys.

Not that when products are grouped, when receiving a designation of a target for which the learning image is to be registered from the product candidates, designation may be received by the product code of the product, or a predetermined product from among the grouped products may be displayed as a representative product and designation received. The predetermined product serving as the representative may be, for example, a product corresponding to the smallest product code number when grouped, or a product selected first when grouped, and is not particularly limited. Furthermore, when registering the learning image, only one product from among the grouped products may be displayed as the product candidate, and in this case, the one product may be the predetermined product serving as the representative as described above.

### <Display Control Unit 132>

The display control unit 132 is a functional unit that displays various information, such as information about the product extracted by the extraction unit 125, on the display touch panel 104.

For each product extracted as the product candidate corresponding to the image of the product captured by the capture unit 111, the display control unit 132 displays an operation element representing the product on a designation screen, which will be described later. This operation element is used to receive designation from the user for each extracted product and to perform for-sale setting using the setting unit 126, and is displayed, for example, as the preset key G221 (see FIG. 5, etc.) on which product information is displayed.

When the display control unit 132 displays on a selection screen an operation element for a plurality of products extracted by the extraction unit 125 as captured product candidates, the product candidates indicated as operation elements may be displayed, for example, in order of the product numbers stored in the product file 121. Furthermore, the product candidates may be displayed in order of degree of similarity calculated by the extraction unit 125. Furthermore, a predetermined number of product candidates having a high degree of similarity may be displayed in order of product number. Furthermore, a product candidate having a high degree of similarity may be displayed in a different manner from other product candidates. This allows encouragement to designate a product having a high degree of similarity, and allows the product to be designated without performing a special operation even when the accuracy of extraction by the extraction unit 125 decreases. Note that, when a plurality of product candidates having a high degree of similarity have the same degree of similarity, the display aspect may be unchanged even when another product having a low degree of similarity is displayed. This is because when there is a product candidate having the same degree of similarity, accuracy of the extraction is considered to be low, and the operator is encouraged to make a more independent decision.

Note that when the product candidates indicated by operation elements are displayed in order of degree of similarity, the order need not be determined strictly according to degree of similarity. For example, a product candidate having a degree of similarity of 90% or more may be displayed as a product candidate having the same degree of similarity without a differentiated display aspect. Furthermore, when the extraction unit 125 extracts only products having a similarity of less than 90% and 70% or more, the operation elements for all extracted products may be displayed without narrowing down the candidates in order of degree of similarity. This increases a probability that at least one of the operation elements displayed on the designation screen is appropriate, and eliminates the need to request that the operator designate the product by another special operation.

Furthermore, when only a product of less than a predetermined degree of similarity, for example, less than 70%, is extracted as the product candidate, the operation element of the product may be left undisplayed, and a screen to call the clerk or an announcement requesting that a different item of the same product be placed may be displayed. This could mean that a product that is not exhibited has been placed on the weighing unit 109, or that there is a possibility that there is a defect in the object scanning function, for example, dust adhering to a lens of the capture unit 111, capture malfunctioning, or the like and therefore inspection is required for continued use.

Furthermore, when the extraction unit 125 is unable to extract the product candidate, the display control unit 132 may display a product search screen. From the search screen, it is possible to search for a product registered in the product file 121 by product name, product number, department, or classification, for example. The product name and product number may be searched for by either a complete match or a partial match. The operator may designate any product from search results. Furthermore, when the extraction unit 125 is unable to extract the product candidate, all products may be displayed on the designation screen and designation of the product may be received.

According to this configuration, even when the learning image of the product is not stored in the product file 121, or when extraction by the extraction unit 125 is not possible due to a reason such as inability to recognize using image analysis art or general object recognition art, the operator may easily designate the product.

Note that the display control unit 132 may also display an operation element for all products differentiated by any classification such as department. The classification may be by color, or by type such as fruits or vegetables, for example. Display of the operation element according to each classification may be performed in a display region or display page that may be switched by selecting a tab.

Furthermore, when the product is object scanned in an operation for purchasing the product, the image of the product obtained by the object scan may be registered in the product file 121 as the learning image. It may be decided as any process whether such as setting is executable at startup.

### <Screen Example (First Operation Mode)>

Here, an example of a screen displayed by the display control unit 132 will be described.

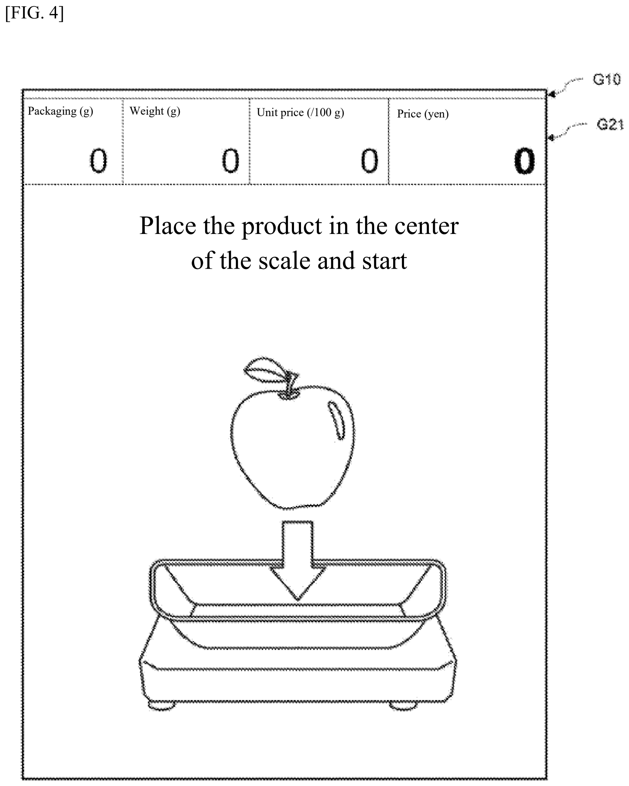

FIG. 4 illustrates a screen G10 (standby screen) standing by in the first operation mode when no product is placed on the weighing unit 109 and weighing and pricing are performable.

In a center of this screen G10, the words "Place the product in the center of the scale and start" and an illustration indicating this are displayed, thereby prompting the operator to place the product on the weighing unit 109.

A product information display area G21 is provided at a top of the screen G10.

The product information display area G21 displays a packaging, weight (or number of pieces), unit price, and price of the product. The field displaying weight reflects the weighed value from the weighing unit 109. When the number of pieces is displayed, the number of pieces may be deduced from the weight and unit weight. The packaging and unit price are read from the product file 121 when the product candidates are extracted by the extraction unit 125 and any product is designated by the operator. When the product is designated by the operator, the price is calculated by the calculation unit 129 based on the packaging, weight (or number of pieces), and unit price, and is displayed. In the illustrated example, since no product is placed on the weighing unit 109, all values are zero.

FIG. 5 illustrates a screen G11 in which the product is placed on the weighing unit 109 and the product candidates extracted by the extraction unit 125 are displayed in the first operation mode.

In addition to the above-mentioned product information display area G21, the screen G11 is provided with a preset key display area G22, a tab G23, a character input area G24, a virtual keyboard G25, a numeral input area G26, and a numeric keypad G27.

In the product information display area G21, the weighed value from the weighing unit 109 is displayed as the weight by the product being placed on the weighing unit 109.

In the preset key display area G22, the preset key G221, which is an operation element for receiving a designation of the product, is displayed in a pressable manner for each product candidate extracted by the extraction unit 125 corresponding to the image of the product captured by the capture unit 111. In the first operation mode, designation of the product for which the label is to be printed is received in response to a press of this preset key G221.

Note that in the first operation mode, the extraction unit 125 only sets the product set as the for-sale product as a target for extraction. Therefore, in the preset key display area G22, only a preset key G221 corresponding to the product set as the for-sale product is displayed, and a key corresponding to the product set as the not-for-sale product is not displayed.

Furthermore, when there is a product extracted by the extraction unit 125 for which a group setting has been made, other products that have been grouped may also be extracted, and the preset key G221 of the other extracted products displayed in the preset key display area G22. However, even in this case, it is preferable not to display the product that is set as the not-for-sale product.

Furthermore, in the preset key display area G22, a plurality of product candidates extracted by the extraction unit 125 are displayed using the preset key G221, but when a product having a different degree of similarity (range of degree of similarity) to the learning image is displayed as the candidate, the preset key G221 may be displayed in a display aspect that allows the degree of similarity to be differentiated. For example, when there is one product having a degree of similarity of 90% or more and two products having a degree of similarity of less than 90%, the product having a degree of similarity of 90% or more may be displayed in a different aspect from the other products to encourage a selection of the operator. On the other hand, when there are two or more products having a degree of similarity of 90% or more, the display aspect may be left unchanged. Furthermore, when there is only a candidate for a product having a degree of similarity of less than 90%, the display aspect of the preset keys G221 may similarly be left unchanged, or all preset keys G221 may be displayed without narrowing down by order of degree of similarity.

Furthermore, the display (arrangement) of the preset keys G221 may be in ascending or descending order of product code or the like, or in order of degree of similarity. Furthermore, when there is one product having a degree of similarity of 90% or more as described above, display columns of the preset keys G221 for that product and for other products may be arranged in two rows. That is, when there is one product having a degree of similarity of 90% or more, the preset key G221 for that product may be displayed on a first row, and the others displayed on a second row, or these may be displayed leaving an interval of one preset key G221. Furthermore, when only a product having a predetermined degree of similarity or below is extracted as the candidate, or when no extraction results are obtained from the object scan, or the like, a situation is conceivable in which the product that is not exhibited has been placed on the weighing unit 109 due to tampering or the like. Therefore, the operator may be notified to place a different object that is the same product on the weighing unit 109, or use may be suspended or the clerk called. The notification may be made in various ways, for example, by displaying a message on the screen, illuminating a sign light, outputting voice or buzzer, or the like.

Furthermore, the preset key G221 illustrated in the figure displays the name of the product, but other product information registered in the product file 121, such as the unit price, may also be displayed as appropriate. Furthermore, a button or operation for transitioning to a screen that edits the product information may be corresponded so that the product information displayed on the preset key G221 may be edited. In this case, it is preferable to configure to return to the original product designation screen once editing of the product information is completed. Such a button or operation may similarly be provided in the other operation modes as well.

The tab G23 is composed of a tab G231 that receives a switching operation of operation modes, and a tab G232 that allows a classification of each product to be designated.

The tab G231 receives switching of the operation mode, but the switching operation is not enabled in a state in which weighing and pricing of the product is being executed, and the switching operation is enabled, for example, by the clerk or the like performing authorization authentication or the like, as described below. When the switching operation is enabled, the operation mode may be switched from the first operation mode to another operation mode such as the third operation mode in response to a press of the tab G231.

When a predetermined tab G232 is selected, the preset key G221 of the product classified in the predetermined tab G232 is displayed in the preset key display area G22, or the preset keys G221 displayed in the preset key display area G22 are narrowed down to those related to the product classified in the predetermined tab G232. Note that in the figure, only one tab G232 capable of designating the classification for each product is provided, but a plurality may be provided according to the classification.

The character input area G24 is an area for character input of product information using the virtual keyboard G25 that displays the Japanese syllabary.

When the product name is input in the character input area G24, a search process or a narrowing down process is executed with reference to the product file 121, and the preset key G221 according to the input product name is displayed in the preset key display area G22, or the preset keys G221 already displayed in the preset key display area G22 are narrowed down to those corresponding to the product name.

Note that the character input area G24 may be configured to allow character input of the color of the product as product information. For example, by inputting "green" in the character input area G24, the preset key G221 for the product corresponded with the color green is displayed in the preset key display area G22.

The numeral input area G26 is an area for inputting numerals relating to product information, such as the product code, from the numeric keypad G27.

When the product code is input in the numeral input area G26, the preset key G221 according to the input product code is displayed in the preset key display area G22, or the preset keys G221 already displayed in the preset key display area G22 are narrowed down to those corresponding to the product code.

In such a screen configuration, the character input area G24 and the virtual keyboard G25, and the numeral input area G26 and the numeric keypad G27 all configure search means for searching for a predetermined product, and narrowing-down means for narrowing down the products matching predetermined conditions from the search results. This allows calling up the product that is not displayed as the preset key G221 in the preset key display area G22.

Note that when the predetermined preset key G221 is designated from the preset key display area G22 in this first operation mode, the content is confirmed and the screen transitions to a label issuance confirmation screen for issuing the label. On the label issuance confirmation screen, for example, the packaging, weight, unit price, and price of the product are specifically displayed in the product information display area G21, which is provided in the same way as on screen G11. The operator checks the contents and, when issuance of the label is to be performed, presses a button requesting the issuance of the label. The printing control unit 130 controls the printing unit 110 in response to this to print the label, and the label is then issued. When the operator wishes to stop issuance of the label, an operation or the like to press a cancel button or a button to return to the screen to designate the product may be performed. Issuance of the label may be stopped by removal of the product from the weighing unit 109. Note that regardless of this example, instead of or in addition to issuance of the label, information about the designated product or the like may be transmitted to an external device as registration data. When issuance of the label ends and the product is removed from the weighing unit 109, the weighed value becomes zero and the screen G10 is returned to, which is on standby such that the next label issuance of a product may be executed.

Furthermore, when the change detection unit 123 detects a change in the weight measured by the weighing unit 109 during processing at a stage before designation of the preset key G221 is received, depending on the extraction process, settings, and circumstances of the product, the process may be executed again from capture, the product candidate re-displayed, and the product candidate updated. Furthermore, when the preset key G221 is designated again before the product candidate is redisplayed in this manner, this may be treated as though the product has been designated from among the product candidates extracted by the processing executed before the processing was redone.

### <Screen Example (Second Operation Mode)>

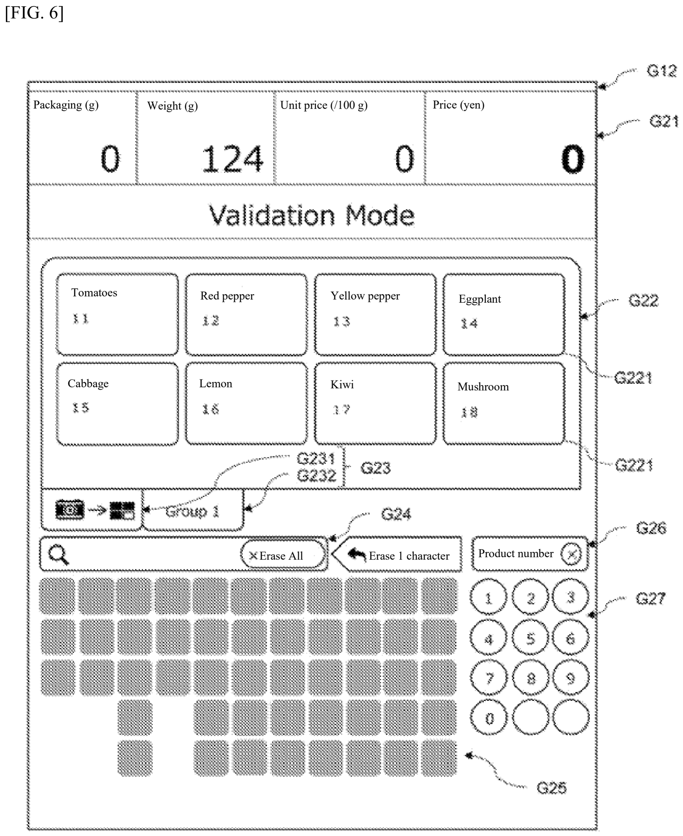

FIG. 6 is a screen G12 when the captured image of the product is registered as the learning image in the second operation mode. This screen G12 is an example of a screen that is displayed when the product is placed on the weighing unit 109 and the product is object scanned in a situation where the learning image has been registered to an extent that object scanning is possible.

The screen G12 displays "Validation Mode" (a name in the system corresponding to the second operation mode), and the operator is able to understand that the operation mode is the second operation mode. Note that the fact that an operation mode is different from another operation mode may be recognized by a background color, a display aspect of the preset key G221, or other character string. However, by making a screen configuration not greatly different from that in the first operation mode, the operator may perform an operation with roughly the same operational feel as in the first operation mode.

In the second operation mode, designation of the product to which the learning image is to be added is received in response to pressing of the preset key G221 displayed in the preset key display area G22. When designation of the product is received by the preset key G221, the learning image is registered in the product file 121 in association with the designated product.

Furthermore, when there is a product extracted by the extraction unit 125 for which a group setting has been made, it is permissible to display only the preset key G221 of a representative product among products that have been grouped, in the preset key display area G22. In this way, even when only the preset key G221 of the representative product is displayed, when designation of the preset key G221 of one product is received, the learning image is also associated with the other grouped product, so that even a product group which is indistinguishable in appearance may be collectively associated with the learning image.

Note that the preset key G221 displayed in the preset key display area G22 in the second operation mode is not limited to one for which the corresponding product is set as the for-sale product, but also includes one for which the corresponding product is set as the not-for-sale product. Furthermore, the preset keys G221 displayed in the preset key display area G22 may be displayed in order of degree of similarity to the product or in ascending or descending order of product code, or the like, as in the case of the first operation mode described above.

In the second operation mode, pressing the tab G231 switches the operation mode from the second operation mode to the first operation mode, and the tab G231 displays an image that enables the user to recognize that the operation mode is being switched.

Note that when the product is object scanned at an early stage when no learning image of the product has been registered, there is no learning image to compare with the image of the product in the captured image, so the screen may display, for example, the preset key G221 of all the products registered in product file 121. In response to this, the operator designates the preset key G221 of the product for which registration of the captured image of the product as the learning image is desired. In this way, the captured image of the product is associated with the product designated as the learning image and is registered in the product file 121.

In this case, the screen displaying the preset key G221 of all the products registered in the product file 121 may be configured by a plurality of a page for which tab switching is possible, and in this case, the operator may view products classified into a predetermined type by switching between tabs and designate a predetermined product from among them. It may also be made possible to narrow down by a product name search, or to narrow down the products by selecting a department or classification (category). Furthermore, instead of a configuration that displays the preset key G221 of all the products registered in the product file 121 on the screen, the product candidate may be displayed as the preset key G221 in response to a search such as a product name search.

Furthermore, when the product is captured by the capture unit 111 and the product candidates are extracted by the extraction unit 125, even when the product for which the learning image is to be registered does not appear as the candidate, or the like, all products registered in the product file 121 may be displayed as the preset key G221. When the predetermined preset key G221 is designated, the learning image is associated with the corresponding product and registered in the product file 121. Note that in this case, as in the case where the learning image is registered at an initial stage as described above, the preset key display area G22 may be configured to allow the products to be narrowed down by switching the tab, or the like, and the tab may be configured to switch depending on whether the learning image has been registered, in addition to departments and classifications (categories).

This allows the learning image to be registered by designating the product, regardless of whether the learning image has been registered.

Note that when the predetermined preset key G221 is designated from the preset key display area G22 in this second operation mode, the screen does not transition to the label issuance confirmation screen as in the first operation mode, but instead announces that the learning image is registered. The announcement may be a display of a message on the screen to the effect that the learning image has been registered, or may be output by voice. It may also be transmitted to another higher-level terminal or the like such as the store controller 2. After a predetermined period of announcement, or after an operation such as pressing a button to acknowledge the announcement, and the screen is returned to which is on standby for a product to be placed on the weighing unit 109 so that a learning image can be subsequently registered.

### <Screen Example (Third Operation Mode)>

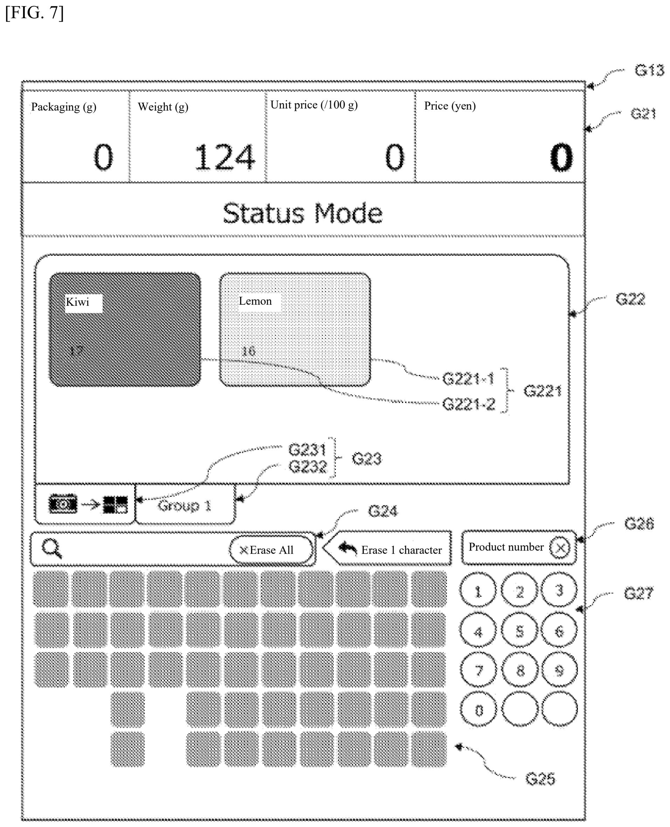

FIG. 7 is a screen G13 when performing for-sale setting of the product in the third operation mode.

The screen G13 displays "Status Mode" (a name in the system corresponding to the third operation mode), and the operator is able to understand that the operation mode is the third operation mode. Note that in this example as well, as described above for the screen G12, the fact that an operation mode is different from another operation mode may be indicated by a background color or a display aspect of the preset key G221.

In the third operation mode, designation of the product is received by pressing of the preset key G221 displayed in the preset key display area G22 while the for-sale setting of the product is switched. That is, in the third operation mode, the preset key G221 also serves as an operation element for performing for-sale setting by the setting unit 126, and each time the preset key G221 is pressed, the designated product is set as the for-sale product or the not-for-sale product, and the setting is registered in the product file 121.

Here, the display aspect of the preset key G221 may be changed depending on whether the corresponding product is set as either the for-sale product or the not-for-sale product. That is, in the illustrated example, a preset key G221-1 indicating "kiwi," which is set as the for-sale product, is displayed in blue, and a preset key G221-2 indicating "lemon," which is set as the not-for-sale product, is displayed in yellow. When the preset key G221 is pressed, a change in the for-sale setting is registered in response to the press, and the color of the preset key G221 also changes to a corresponding color.

Note that this color scheme is an example, and any color scheme may be used as long as it allows for differentiation between the for-sale product and the not-for-sale product. Furthermore, various aspects may be adopted as long as they allow for differentiation between the for-sale product and the not-for-sale product, not limited to differentiation by color, for example, one of the products may be made to flash, or a design or wording capable of differentiating the two may be attached to either or both. Furthermore, products may be displayed divided into groups of the for-sale products and the for-sale products, which is easy to understand when there are many product candidates.

Furthermore, the display aspect of the preset key G221 displayed in the third operation mode and the preset key G221 displayed in the first operation mode may also be different. For example, in the third operation mode, the preset key G221 for a product set as the for-sale product is displayed in blue, and one that is not for sale is displayed in yellow, and the preset key G221 displayed in the first operation mode is displayed in white. This makes it easy to understand in which operation mode an operation is being performed.

Note that in the preset key display area G22, all preset keys G221 of the products which are extraction targets are displayed regardless of whether the products corresponding to the preset keys G221 are grouped, and even grouped products may be individually set. Furthermore, when a group setting has been made for a product which is an extraction target, it is permissible to display all the preset keys G221 of the products that have been grouped in the preset key display area G22.

Furthermore, the third operation mode may be configured to be switchable after receiving any operation by an operator such as the clerk while the first operation mode is being executed. As a result, for example, when the product is captured in the first operation mode and the product candidate is displayed by the preset key G221, when the preset key G221 of a predetermined product, which is supposed to be the not-for-sale product, is displayed, the first operation mode is temporarily put on hold and the system transitions to the third operation mode. In the preset key display area G22 of the third operation mode transitioned to, the preset key G221 displayed in the first operation mode is displayed in an aspect that makes it possible to differentiate whether it is set as the for-sale product or the not-for-sale product. The operator may change the setting of the predetermined product from the for-sale product to the not-for-sale product and return to the first operation mode. As a result, the preset key G221 of the predetermined product that was previously displayed as the for-sale product is no longer displayed.

However, this does not prevent the third operation mode from being executed separately from execution of the first operation mode, and, for example, the third operation mode may be executed by selecting the third operation mode from a menu screen independent of each operation mode.

Furthermore, even in the third operation mode, pressing the tab G231 switches the operation mode from the third operation mode to the first operation mode, and the tab G231 displays an image that enables the user to recognize that the operation mode is being switched.

In this way, a target product for which for-sale setting is to be performed may be designated from the product candidates extracted by object scanning, so a workload of work may be suppressed compared to searching for the target product based on the product number from the list of products registered in product file 121 and making a for-sale setting. Furthermore, since the for-sale setting may be performed with an operation feeling similar to that of registration of the learning image in the second operation mode described above, the operator easily becomes familiar with the operation.

Note that, when a new product is exhibited in the store and the product has not been exhibited before, the clerk must check whether object scanning is correctly performed after the product is exhibited. The confirmation may be performed, for example, by checking whether the correct product candidate is displayed as the preset key G221 on the screen G11 by object scanning when the product is placed on the weighing unit 109 in the first operation mode. Preparation is complete when several other pieces of the same type are placed on the weighing unit 109 and a suitable product candidate is extracted as expected. On the other hand, when no suitable product candidate is extracted, it is necessary to check the for-sale setting of the product. At this time, it is convenient for the operator such as the clerk to be able to perform authorization authentication from the screen G11 that performs weighing and pricing and then transition to the third operation mode. Authority may be authenticated by, for example, scanning a barcode or the like of the clerk using the capture unit 111, or by password input or the like, and is not particularly limited. Furthermore, transition to the third operation mode is not limited to pressing of the tab G231 described above, but may also be triggered by authorization authentication being performed during the first operation mode. When transitioning to the third operation mode, as described above, the operator may check the for-sale setting for each product candidate on screen G13 as to whether the product is the for-sale product or the not-for-sale product, and may switch the for-sale setting.

### <Screen Example (Fourth Operation Mode)>

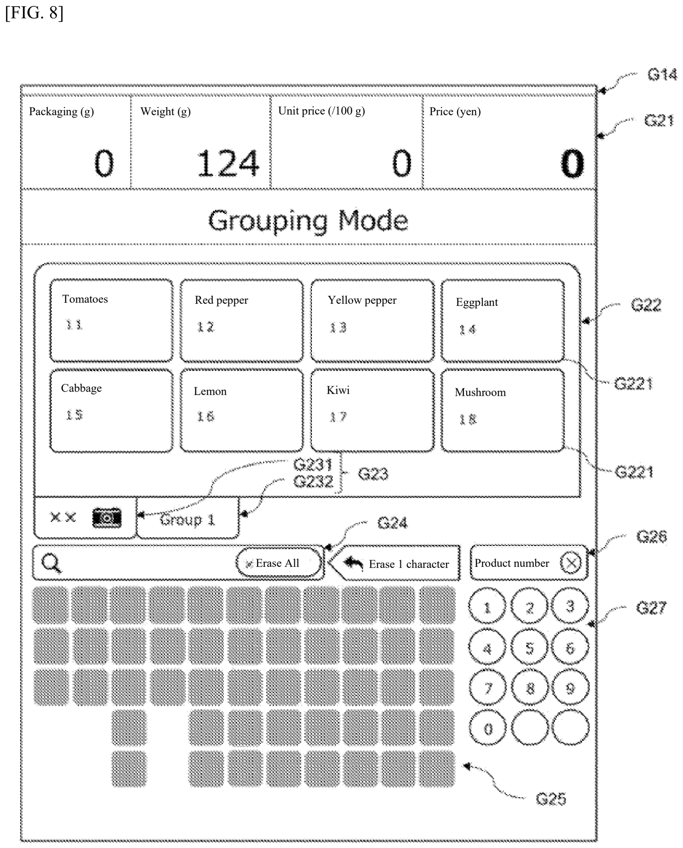

FIG. 8 is a screen G14 when performing grouping of a product in the fourth operation mode.

The screen G14 displays "Grouping Mode" (a name in the system corresponding to the fourth operation mode), and the operator is able to understand that the operation mode is the fourth operation mode.

In the fourth operation mode, when a plurality of products are designated by pressing the preset key G221 displayed in the preset key display area G22, then an operation requesting registration is performed, the designated plurality of products is grouped by the grouping unit 128 and the group setting is registered in the product file 121. Note that a number of the preset key G221 for a designated product is not particularly limited, and the group setting is validly received as long as it is a plurality of two or more. Furthermore, until an operation requesting registration is performed, selection and deselection of the product may be performed according to designation of the preset key G221. Furthermore, the operation to request registration may be performed in various aspects, such as by pressing a separately provided button on the screen or a completion key of mechanical keys.

### • Processing flow

Next, a flow of processing executed by the weighing device 1 according to the present embodiment will be described for each operation mode.

Note that when the weighing device 1 is turned on, a menu screen from which it is possible to select an operation mode is displayed. When a predetermined operation mode is selected from the menu screen, a standby screen for that operation mode is displayed. From the standby screen of each operation mode, it may be made possible to return to the menu screen by a predetermined operation. However, switching means such as a switching button for operation modes may be provided on the screen for each operation mode, and transition from the predetermined operation mode to another operation mode made possible in response to an operation of the switching means.

### <Processing Flow 1 (First Operation Mode)>

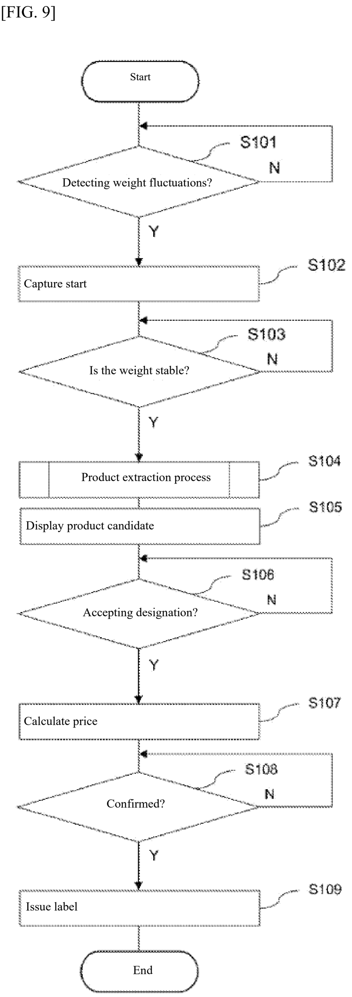

FIG. 9 shows a flow of processing in the first operation mode.

When the product is placed on the weighing unit 109 on the standby screen indicated in the example of the screen G10 described above, the change detection unit 123 detects a fluctuation in weight on the weighing unit 109 (S101), and the above-mentioned screen G11 is displayed. Note that the weighing control unit 122 constantly executes weighing using the weighing unit 109, and the weighed value is displayed on the screen G11. Furthermore, when the product is removed from the weighing unit 109 in subsequent processing and the weight value becomes zero, the standby screen G10 is returned to.

The capture unit 111 captures the product placed on the weighing unit 109 triggered by a fluctuation in weight (S102).

When the weight weighed by the weighing unit 109 becomes stable (S103), the extraction unit 125 extracts the product candidate corresponding to the captured product from the product file 121 (S104). Details of the extraction process will be described later.

The display control unit 132 displays the extracted product candidate on the screen as an operation element (preset keys G221) (S105). The product is designated by pressing of any operation element, and when the designation reception unit 131 receives designation (S106), the calculation unit 129 calculates the price according to the weight of the product (or a number of pieces calculated from the unit weight) (S107), and the price is displayed on the screen.

When content of the label to be issued is confirmed and an operation indicating confirmation is received from the operator, or the like (S108), the printing control unit 130 controls the printing unit 110 to issue the label (S109).

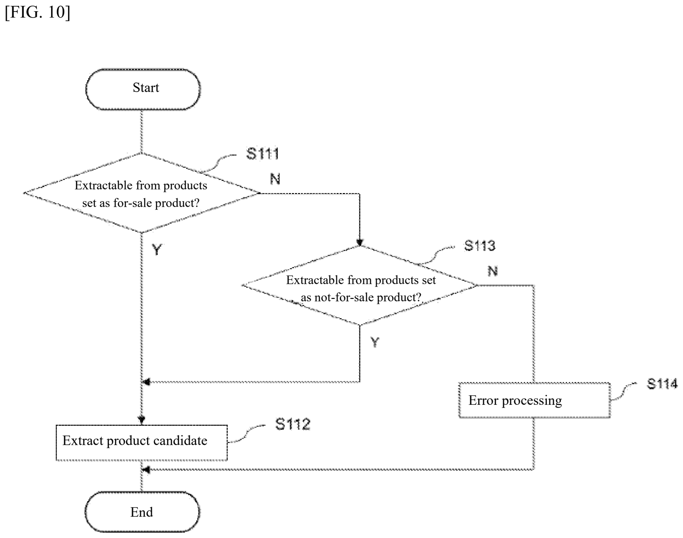

Here, a detailed flow of the extraction process in S104 described above is shown in FIG. 10.

First, the extraction unit 125 attempts extraction of the product to become the candidate from the products set as for-sale products by referencing the product file 121 based on the image of the product captured by the capture unit 111 (S111). As described above, in extraction of the product candidate, the degree of similarity between the image of the product and the registered learning image is calculated. As a result, if the product candidate corresponding to the captured product can be extracted from the products set as for-sale products, the product is extracted as the candidate (S112).

On the other hand, if the product to become the candidate cannot be extracted from the products set as for-sale products, the extraction unit 125 attempts extraction of the product to be the candidate from the products set as not-for-sale products (S113). As a result, if the product candidate corresponding to the captured product can be extracted from the products set as not-for-sale products, the product is extracted as the candidate (S112).

If the product to become the candidate cannot be extracted from the products set as not-for-sale products either (S113), an error process is executed (S114). In the error process, for example, the clerk calling screen is displayed to prompt calling of the clerk, or an announcement is displayed requesting that a different item of the same product be placed. When the clerk is called, the clerk may call up a relevant product by a product number search, or when the product is placed on the weighing unit 109 again in response to an announcement requesting to place a different item of the same product, the series of processes from S101 described above is executed again. Note that instead of such error processing, a message such as "Please select from the preset keys" may be displayed along with the preset keys to prompt designation of the product.

When the customer receives issuance of the label, settlement is performed by the POS terminal 3 using the label. The label is printed with a barcode, product code, or the like that encodes settlement information including, for example, the product name, price, content volume corresponding to the weight, unit price, store name, price, and the like, and settlement may be performed based on the information printed on the label.

Note that when the product is extracted from the products set as not-for-sale products in S113, this fact may be displayed on the screen, or the display aspect of the preset key G221 may be changed, or the product may not be displayed on the screen as the preset key G221, but a state indicated by displaying a mark that only the clerk can understand or the like. Note that in addition to or instead of the screen display, audio output, lighting or blinking of a sign lamp, notification to another terminal, or other output may be performed.

Furthermore, in the illustrated example, when the product candidate cannot be extracted from the for-sale products, an attempt is made to extract the product candidate from the not-for-sale products, but in other embodiments, when the product candidate cannot be extracted from the for-sale products, the error process (S114) may be reached without attempting to extract the product candidate from not-for-sale products. In this case, when extraction is possible as long as the product set as the not-for-sale product is targeted, this fact may be notified to the clerk in an aspect that only the clerk can understand, such as by displaying the mark on the screen. The aspect of notification may be the same as the above or may be by another aspect.

Furthermore, when the error processing step of S114 is reached, a situation is conceivable in which, in extraction of the product candidate corresponding to the captured image, there is a product associated with the learning image having a certain degree of similarity or more, but the degree of similarity is not sufficient to display as a candidate, or a candidate could not be extracted from the product associated with the learning image. Therefore, the clerk or the like may be notified of the respective situations in a recognizable aspect, for example, by displaying a message or a mark, or the like. When this allows it to be understood that the learning image has not been registered, the corresponding product may be called up immediately by a product number search or the like without going through the effort of understanding the situation of the product from each maintenance screen, or the like.

Furthermore, step S104 may be performed simultaneously with step S103 or before the weight becomes stable. However, according to a configuration in which step S104 is executed after a condition of step S103 is satisfied, the degree of similarity may be calculated when the product is in a stable, stationary state, ensuring higher distinguishing accuracy.

### <Processing Flow 2 (Second Operation Mode)>

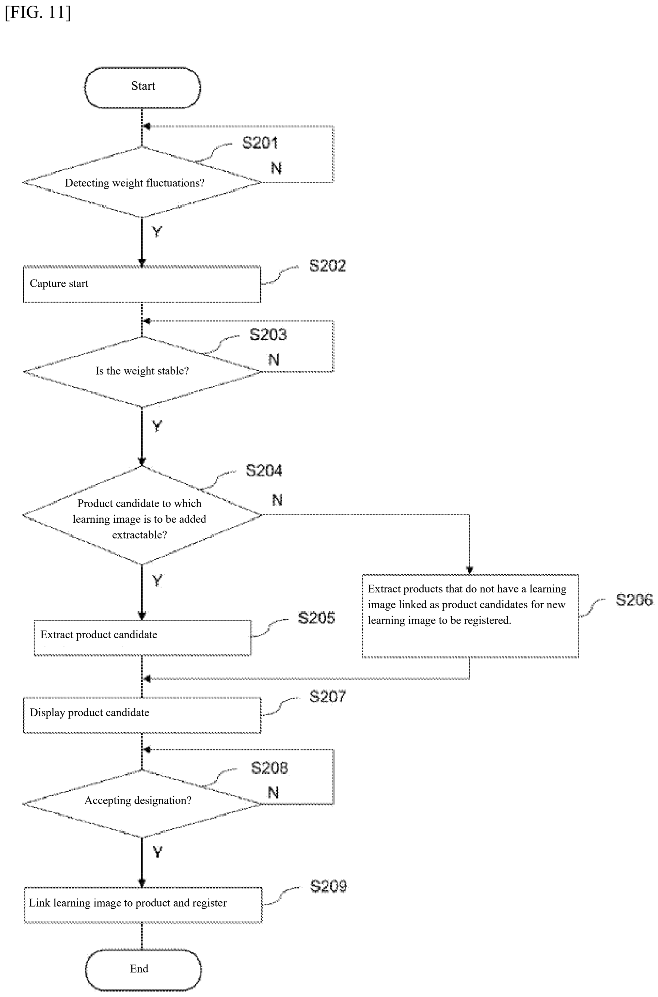

FIG. 11 shows a flow of processing in the second operation mode.

Similar to the processing in the first operation mode (S101 to S103) described above with reference to FIG. 9, on the standby screen, when an operator such as the clerk places the product to teach to the weighing device 1 on the weighing unit 109, the change detection unit 123 detects a fluctuation in weight on the weighing unit 109 (S201), and the above-mentioned screen G12 is displayed. Then, when the capture unit 111 captures the product placed on the weighing unit 109 triggered by a fluctuation in weight (S202), stabilization of the weight weighed by the weighing unit 109 is waited for (S203). Note that in this second operation mode as well, the weighing control unit 122 constantly executes weighing using the weighing unit 109, and the weighed value is displayed on the screen G12. Furthermore, when the product is removed from the weighing unit 109 and the weight value becomes zero, the standby screen is returned to.

When the weight on the weighing unit 109 stabilized, the extraction unit 125 attempts extraction of the product candidate to which the learning image is to be added by referencing the product file 121 based on the captured image of the product (S204). As a result, if, for example, a product may be identified that has an associated learning image that matches the captured image of the product at a predetermined degree of similarity or higher, the identified product is extracted as the product candidate to which the learning image is to be added (S205).

On the other hand, if a product cannot be identified that has an associated learning image that matches the captured image of the product at a predetermined degree of similarity or higher, and therefore it is not possible to extract a product candidate to which the learning image is to be added, it is assumed that the captured product does not yet have a learning image registered, or that there are not enough learning images registered to enable effective object scanning, and a product having no associated learning image is extracted as a product candidate to which the learning image is to be newly registered (S206).

Note that in the processes of S205 and S206, the extraction unit 125 may attempt extraction of a product candidate from both products set as for-sale products and products set as not-for-sale products.

The display control unit 132 displays the extracted product candidate on the screen as an operation element (preset keys G221) (S207). When the product is designated by pressing any of the operation elements and the designation reception unit 131 receives designation (S208), the registration unit 127 acquires the captured image of the product as the learning image and registers it in the product file 121 in association with the designated product (S209).

### <Processing Flow 3 (Third Operation Mode)>

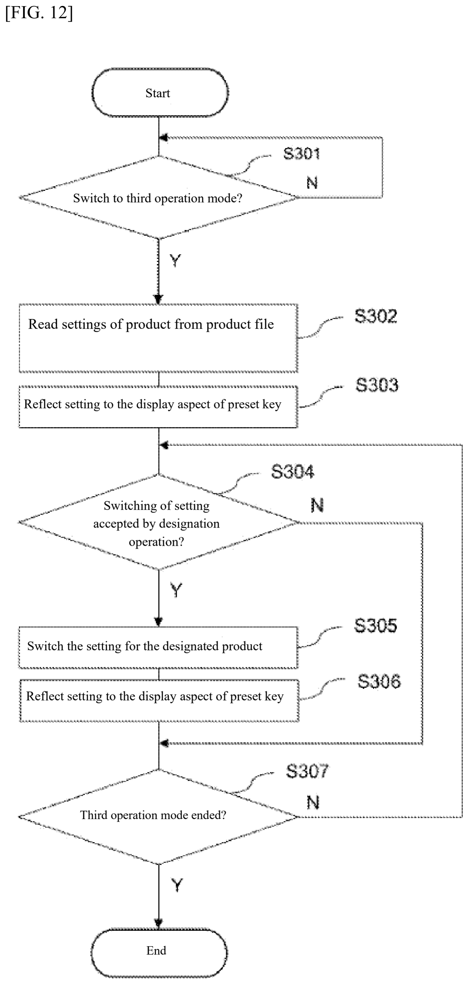

FIG. 12 shows a flow of processing in the third operation mode.

Here, the flow of processing performed by switching the operation mode to the third operation mode while the first operation mode is being executed will be described.

Following the steps described with reference to FIG. 9, when a switch in the operation mode is received in step S105 in a state in which the product candidate is displayed as the preset key G221 (S301), the for-sale setting for the product is read from the product file 121 (S302), and the for-sale setting is reflected in the display aspect of the preset key G221 (S303).

The operator checks the for-sale setting of the product from the display aspect of the preset key G221, and it is determined that the product needs a setting to be switched, the product is designated by the preset key G221 and the change of the for-sale setting is requested (S304). In response to this, the setting unit 126 switches the for-sale setting of the designated product and registers this in the product file 121 (S305). In response to the switch in the for-sale setting, the setting is reflected in the display aspect of the preset key G221 of the target product (S306).

When an operation to end the third operation mode is performed, the operation mode switches to the first operation mode, and the label is issued via steps S106 following.

Note that in the above example, the for-sale setting was performed for each product by switching from the first operation mode to the third operation mode, but similar to the first operation mode and the second operation mode described above, the product may be captured from a predetermined standby screen in the third operation mode to display the preset key G221 of the product, and the for-sale setting switched for each preset key G221.

Furthermore, similar to when the operation mode is switched from a state in which the preset key G221 is displayed in the first operation mode to the third operation mode, it may be possible to switch the operation mode from a state in which the preset key G221 is displayed in the second operation mode or the fourth operation mode described below to the third operation mode, and enable for-sale setting to be performed for each product displayed as the preset key G221.

### <Processing Flow 4 (Fourth Operation Mode)>

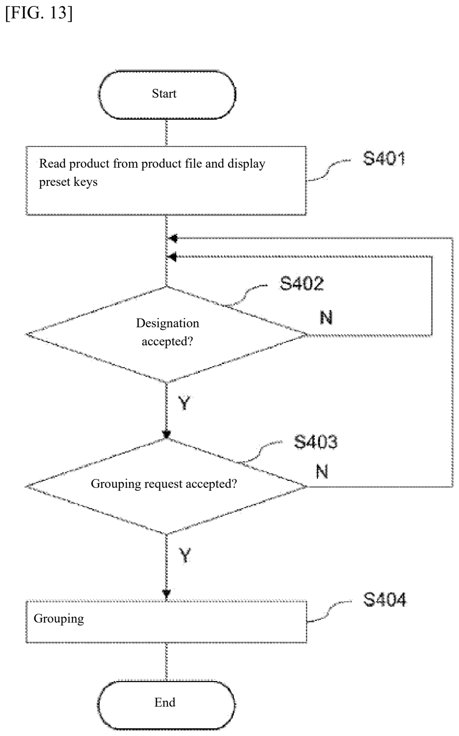

FIG. 13 shows a flow of processing in the fourth operation mode.

First, on a predetermined standby screen, the product is read from the product file 121 and the preset key G221 is displayed on the screen (S401). The product displayed as the preset key G221 may be, for example, one extracted by a product number search or the like, or may be all products registered in the product file 121 extracted.

When the operator designates any preset key G221 from the preset keys G221 displayed on the screen, the designation reception unit 131 receives this (S402). When a plurality of the preset key G221 is designated and an operation to request grouping is performed by pressing a predetermined button on the screen or the like (S403), the grouping unit 128 groups the designated plurality of products and sets this in the product file 121 (S404).

Note that, in the processing flow in any of the first to fourth operation modes above, an order of steps may be changed as appropriate as long as no contradiction occurs.

According to the weighing device 1 according to the present embodiment above, it is possible to easily perform for-sale setting for a product extracted by object scanning. In particular, the extracted product is displayed as a designatable preset key G221, and the setting may be easily updated by a touch (press) operation, which is convenient because the setting is displayed in an aspect that can be understood at a glance. Furthermore, object scanning also extracts a product similar to the captured product, which is useful because it allows the for-sale setting for similar products to be updated at the same time. Furthermore, the setting may be performed with a similar operation feel as a normal transaction operation, and there is no hassle of selecting target or non-target for products from a product list.

Furthermore, for any product registered in the product file 121, registration of the learning image and setting of the product may be performed by a general-purpose and simple operation. In particular, rather an order of capturing the product after product number designation then inputting the image, the process is performed in an order of capturing the product and then designating the product number (product), so it is possible to register learning images consecutively without switching product numbers.

Furthermore, simply by placing the product on the weighing unit 109, the learning image is generated by the capture unit 111, and for products for which the learning image has already been registered, the product candidate for which the learning image is to be registered is automatically extracted by object scanning, so there is no hassle of designating the product for which the learning image is to be registered.

Furthermore, even when the operator is not aware of whether to register the learning image for the product for which the learning image has been registered or for which the learning image has not yet been registered, only the product for which the learning image has not yet been registered is extracted as the candidate in accordance with the results of the object scan, making it easy to designate the product and easy to immediately understand that the learning image has not yet been registered.

Furthermore, even when a product other than an intended product is mistakenly captured during the process of registering the learning image, the product candidate corresponding to the captured image is simply extracted, and there is no risk of a correspondence between the learning image and the product being mistakenly registered, which significantly reduces situations in which a learning image that has been mistakenly registered must be deleted.

Furthermore, the operation screen is not a special screen, but may be operated while depicting a normal operation screen.

Furthermore, as a result of grouping predetermined products, learning images may be conveniently registered collectively for products that have similar appearances or physical appearances.

Furthermore, it is easy to perform for-sale setting for products extracted by object scanning. In particular, the extracted product is displayed as a designatable preset key G221, and the setting may be easily updated by a touch (press) operation, which is convenient because the setting is displayed in an aspect that can be understood at a glance. Furthermore, object scanning also extracts a product similar to the captured product, which is useful because it allows the for-sale setting for similar products to be updated at the same time. Furthermore, the setting may be performed with a similar operation feel as a normal transaction operation, and there is no hassle of selecting target or non-target for products from a product list.

Note that in relation to the present embodiment above, when the weighing device 1 is provided with a function of the POS terminal 3, or the information processing device according to the present invention is configured as the POS terminal 3, the POS terminal 3 performs a process such as extraction of the product by object scanning, and a process such as product registration as the for-purchase product or product settlement for registered products. The POS terminal 3 may be any type of POS terminal, such as a normal POS terminal at which the clerk performs operations from product registration to settlement, a full-self-service POS terminal at which the customer performs product registration and settlement themselves, or a semi-self-service POS terminal at which the clerk registers the product using a registration machine and the customer performs settlement using a settlement machine, and each POS terminal is provided with a functional unit that known POS terminals are provided with. That is, it is provided with a display/operation unit for displaying various information and performing operations, a reading unit for reading various codes to obtain information, a payment unit that supports payments using various payment media and cash, a communication unit that enables data communication with the store controller 2, etc., and the like. Note that in this case, the POS terminal 3 may not only register the learning image, but in product registration as well, as described above, present a plurality of product candidates from captured images of the product as preset keys G221 and receive designation. Furthermore, the POS terminal 3 may be configured to allow the for-sale setting and the like to be performed in the same manner as described above.

Furthermore, in the present embodiment above, the learning image of the product sold to the customer is registered, but the target of object scanning or the target for registering of the learning image may be an article other than such a product. For example, a container used for bulk sale (selling by weight) may be set as the target. That is, in bulk sale, containers of a plurality of sizes are used when selling products such as prepared foods and fruits, and the plurality of sizes of containers may be offered from the store to the customer at different prices depending on the size. Furthermore, each container has a different packaging weight according to the size. In this case, it would be convenient for the container to be object scanned when placing the product in the container, and the price of the container to be reflected in the settlement amount or the packaging weight of the container to be subtracted from the weighed value. Therefore, it would be useful to apply the present invention described above to such situations, and register the price, packaging weight, and learning image for each size of container, and when registering images of the plurality of sizes of container as learning images, to present a container candidate to the operator, allowing the operator to designate any container.

Note that depending on the viewpoint, the present invention may be configured as a computer program or a method invention. A computer program may be provided stored in a recording medium capable of reading various data, or provided downloadable via a network such as the Internet.

Furthermore, in other embodiments, as described above, the information processing device according to the present invention may be configured as a POS terminal or as a display device, but the information processing device according to the present invention may be configured otherwise as long as it is a device that at least performs image processing regardless of the name, etc. thereof.

Furthermore, these software resources may be distributed or consolidated into any hardware resources through appropriate design, and the hardware resources may also be configured as a physically integrated device or as separate devices.

Specifically, for example, they may be configured as an information processing system provided with the weighing device 1 and the cloud server 4 positioned as a higher-level device of the weighing device 1. In this case, for example, the weighing device 1 is provided with at least the display touch panel 104, the weighing unit 109, the capture unit 111, the weighing control unit 122, the capture control unit 124, and the display control unit 132. Furthermore the cloud server 4 is provided with the extraction unit 125 that extracts the product candidate according to the image of the product captured by the capture unit 111. The weighing device 1 and the cloud server 4 transmit and receive information required of each other via a network. That is, the weighing device 1 transmits to the cloud server 4 an image in which the product is captured, information designating the product for which the learning image is to be registered from the product candidates, and the like, and the cloud server 4 transmits to the weighing device 1 information relating to the product candidate extracted based on the image in which the product is captured, and the like.

Alternatively, the weighing device 1 transmits to the cloud server 4 an image in which the product is captured and information relating to the operation of the for-sale setting by the operator, and the cloud server 4 transmits to the weighing device 1 information relating to product candidate extracted based on the image in which the product is captured, and the like.

### <Additional Notes>

An information processing device according to another embodiment of the present invention is provided with: capture means for capturing an article; extraction means for extracting an article corresponding to the article captured by the capture means from predetermined storage means from a degree of similarity using the learning image as a standard image; designation reception means for receiving a designation of a predetermined article from one or a plurality of articles extracted by the extraction means; and acquisition means for acquiring an image of the predetermined article designated by the designation reception means and the article captured by the capture means as the learning image, wherein when there is no learning image of the article captured by the capture means or when the extraction means cannot extract an article based on the learning image, the designation reception means receives designation from all articles registered in the predetermined storage means, and when an article is extracted by the extraction means based on the image of the article captured by the capture means, it receives designation from the extracted article.

The device may also be provided with setting means for setting whether an article extracted by the extraction means based on the learning image of the article captured by the capture means is a target or a non-target of extraction by the extraction means in an operation mode that executes a transaction.

The device may be provided with switching means for switching between a first mode and a second mode, and by the switching means, the designation reception means may function, when in the first mode, to receive an instruction to acquire an image of the article captured by the capture means as the learning image by the acquisition means, and, when in the second mode, receive a setting as to whether the article is a target or a non-target of extraction by the extraction means in the operation that executes a transaction.

### • Summary of embodiments

The present invention relates to an information processing device, an information processing system, and a computer program.

Art of so-called object scanning is known in which a standard image of an article obtained by capturing an article and a learning image serving as a reference image for image recognition are compared to identify the article.

For example, JP 2017-162217 A discloses an article distinguishing device provided with a tray on which an article is placed, a backlight source that illuminates from a bottom surface side of the tray using a backlight, a digital camera that captures the article on the tray, and a distinguishing computer that performs image recognition of the image from the digital camera and distinguishes the article. This article distinguishing device extracts the article on the tray from a difference image between an image taken when the backlight source is on and an image taken when the backlight source is off.

Image learning for object scanning involves capturing an article for each target product, designating the article each time, and registering the image, which is extremely tedious.

Therefore, one object of the present invention is to provide a device that can easily register a learning image to be used in object scanning.

In order to achieve the above objects, the information processing device according to one perspective of the present invention is provided with capture means for capturing a product, extraction means for extracting product candidates to which a learning image is to be added by referencing product information storage means for storing product information based on an image of the product captured by the capture means, designation reception means for receiving a designation of a product to which the learning image is to be added and registered from the product candidates extracted by the extraction means, and registration means for registering the image of the product captured by the capture means as the learning image in the product information storage means in association with the product designated in the designation reception means.

The extraction means, when the product candidate to which the learning image is to be added cannot be extracted based on the image of the product captured by the capture means, extract a product to which the learning image is not associated as a product candidate to which the learning image is to be newly registered, and the designation reception means may receive a designation of a product to which the learning image is to be newly registered from the product candidates extracted by the extraction means.

The extraction means are provided with display means for, when a product candidate to which the learning image is to be added cannot be extracted based on the image of the product captured by the capture means, the device is provided with display means, selectively displaying a product stored in the product information storage means as a product candidate to which the learning image is to be newly registered, and the designation reception means receives a designation of a product to which the learning image is to be newly registered from product candidates displayed by the display means.

The extraction means, when a weight of a product weighed by weighing means is in a transaction weighing range, may extract the product candidate to which the learning image is to be added by referring to the product information storage means for storing the product information based on the image of the product captured by the capture means.

The device may further be provided with grouping means for grouping predetermined products, wherein when the product for which a designation has been received is any one product among products grouped by the grouping means, the registration means may register an image captured by the capture means as the learning image in the product information storage means in association with all products grouped with the product designated by the designation reception means.

An information processing system according to one perspective of the present invention is configured to be capable of communication between an information processing device and a higher-level management device via a network, wherein the information processing device is provided with capture means for capturing a product, and designation reception means for receiving a designation of a product to which a learning image is to be added and registered from product candidates to which an image of the product captured by the capture means is added as the learning image, and the management device is provided with product information storage means for storing product information, extraction means for extracting a product candidate to which the learning image is to be added by referencing the product information storage means based on the image of the product captured by the capture means, and registration means for registering the image of the product captured by the capture means as the learning image in the product information storage means in association with the product designated by the designation reception means.

A computer program according to one perspective of the present invention causes a computer to execute: a capture process that captures a product; an extraction process that extracts a product candidate to which a learning image is to be added by referencing product information storage means for storing product information based on an image of the product captured by the capture process; a designation reception process that receives a designation of a product to which the learning image is to be added and registered from the product candidates extracted by the extraction process; and a registration process that registers the image of the product captured by the capture process as the learning image in the product information storage means in association with the product designated in the designation reception process.

A computer program according to one perspective of the present invention, in a system configured to be capable of communication between an information processing device and a higher-level management device via a network, causes the information processing device to execute: a capture process that captures a product; and a designation reception process that receives a designation of a product to which a learning image is to be added and registered from product candidates to which an image of the product captured by the capture process is added as the learning image, and causes the management device to execute: an extraction process for extracting a product candidate to which the learning image is to be added by referencing product information storage means for storing product information based on the image of the product captured by the capture means; and a registration process that registers the image of the product captured by the capture process as the learning image in the product information storage means in association with the product designated by the designation reception process.

According to the article distinguishing device according to the embodiment of the present invention above, the learning image used for object scanning can be easily registered.

Furthermore, for example, JP 7125179 discloses a product recognition device provided with a storage unit that pre-stores an image database in which at least learning image information and product names are corresponded for a plurality of products; a learning unit that performs machine learning using the learning image information and product names stored in the image database to generate a taught distinguishing engine; and a distinguishing unit that uses the distinguishing engine to distinguish the product name of a target product based on image information of the target product.

In this regard, when performing an object scan of the for-purchase product in a store such as a supermarket, when all products registered in predetermined storage means are targets of object scanning, there is a possibility that a product not currently on sale will be extracted. Therefore, it is necessary to search for a target product from predetermined storage means and set whether or not to make it for sale. However, it is cumbersome and tedious to search for and set up each target product.

Therefore, one object of the present invention is to provide a device that can easily perform for-sale setting of a product.

In order to achieve the above objects, the information processing device according to the present invention is provided with capture means for capturing a product, extraction means for extracting product candidates corresponding to an image of the product captured by the capture means by referencing product information storage means that store product information based on the image of the product captured by the capture means in a predetermined operation mode in which an operation for purchasing the product is performed, and setting means for setting the product extracted by the extraction means in the predetermined operation mode as a for-sale product or a not-for-sale product.

The device may further be provided with display control means for displaying an operation element for performing a setting using the setting means for each product extracted by the extraction means as the product candidates, wherein the display control means may vary a display aspect of the operation element depending on whether the product is set as the for-sale product or the not-for-sale product.

The device may be provided with the predetermined operation mode and a product information maintenance mode, wherein the extraction means may extract the product candidate from the products set as the for-sale products in the predetermined operation mode, and may extract the product candidate from the products set as the for-sale products and the products set as the not-for-sale products in the maintenance mode.

The extraction means may be configured to, in the predetermined operation mode, when it is not possible to extract the product candidate from the products set as the for-sale products, extract the product candidate from the products set as the not-for-sale products and output to that effect.

The extraction means may reference the product information storage means to set the learning image associated with the product as a standard image, and extract the product candidate corresponding to the image of the product captured by the capture means, as well as exclude from extraction targets a product not associated with the learning image among the for-sale products and the not-for-sale products.

An information processing system according to one perspective of the present invention is configured to be capable of communication between an information processing device and a higher-level management device via a network, wherein the information processing device is provided with capture means for capturing a product, and the management device is provided with product information storage means for storing product information, extraction means for extracting product candidates corresponding to an image of the product captured by the capture means by referencing product information storage means that store product information based on the image of the product captured by the capture means in a predetermined operation mode in which an operation for purchasing the product is performed, and setting means for setting the product extracted by the extraction means in the predetermined operation mode as a for-sale product or a not-for-sale product.

A computer program according to one perspective of the present invention causes a computer to execute: a capture process that captures a product; an extraction process that extracts product candidates corresponding to the image of the product captured by the capture means by referencing product information storage means that store product information based on the image of the product captured by the capture means in a predetermined operation mode in which an operation for purchasing the product is performed; and a setting process that sets the product extracted by the extraction means in the predetermined operation mode as a for-sale product or a not-for-sale product.

A computer program according to one perspective of the present invention, in a system configured to be capable of communication between an information processing device and a higher-level management device via a network, causes the information processing device to execute a capture process that captures a product, and causes the management device to execute: an extraction process that extracts product candidates corresponding to the image of the product captured by the capture process by referencing product information storage means that store product information based on the image of the product captured by the capture process in a predetermined operation mode in which an operation for purchasing the product is performed; and a setting process that sets the product extracted by the extraction process in the predetermined operation mode as a for-sale product or a not-for-sale product.

According to the article distinguishing device according to the embodiment of the present invention above, it is possible to easily perform for-sale setting based on a product extracted by object scanning.

### [Description of Reference Numerals]

- 1: : Weighing device (information processing device)
- 104: : Display touch panel (display means)
- 109: : Weighing unit (weighing means)
- 110: : Printing unit
- 111: : Capture unit (capture means)
- 121: : Product file (product information storage means)
- 122: : Weighing control unit
- 123: : Change detection unit
- 124: : Capture control unit
- 125: : Extraction unit (extraction means)
- 126: : Setting unit (setting means)
- 127: : Registration unit (registration means)
- 128: : Grouping unit (grouping means)
- 129: : Calculation unit
- 130: : Printing control unit
- 131: : Designation reception unit (designation reception means)
- 132: : Display control unit
- 2: : Store Controller
- 3: : POS terminal
- 4: : Cloud server
- G21: : Product information display area
- G22: : Preset key display area
- G221: : Preset key

## Claims

1. An information processing device comprising:
capture means for capturing a product;
extraction means for extracting product candidates to which a learning image is to be added by referencing product information storage means for storing product information based on an image of the product captured by the capture means;
designation reception means for receiving a designation of a product to which the learning image is to be added and registered from the product candidates extracted by the extraction means; and
registration means for registering the image of the product captured by the capture means as the learning image in association with the product designated in the designation reception means.

2. The information processing device according to claim 1, wherein:
the extraction means, when the product candidate to which the learning image is to be added cannot be extracted based on the image of the product captured by the capture means, extract a product to which the learning image is not associated as a product candidate to which the learning image is to be newly registered; and
the designation reception means receives a designation of a product to which the learning image is to be newly registered from the product candidates extracted by the extraction means.

3. The information processing device according to claim 1, wherein:
the extraction means are provided with display means for, when a product candidate to which the learning image is to be added cannot be extracted based on the image of the product captured by the capture means, selectively displaying a product stored in the product information storage means as a product candidate to which the learning image is to be newly registered; and
the designation reception means receives a designation of a product to which the learning image is to be newly registered from product candidates displayed by the display means.

4. The information processing device according to any one of claims 1 to 3, wherein the extraction means, when a weight of a product weighed by weighing means is in a transaction weighing range, may extract the product candidate to which the learning image is to be added by referring to the product information storage means for storing the product information based on the image of the product captured by the capture means.

5. The information processing device according to any one of claims 1 to 3, further comprising grouping means for grouping predetermined products, wherein, when the product for which a designation has been received is any one product among products grouped by the grouping means, the registration means may register an image captured by the capture means as the learning image in the product information storage means in association with all products grouped with the product designated by the designation reception means.

6. An information processing system configured to be capable of communication between an information processing device and a higher-level management device via a network, wherein:
the information processing device comprises:
capture means for capturing a product; and
designation reception means for receiving a designation of a product to which a learning image is to be added and registered from product candidates to which an image of the product captured by the capture means is added as the learning image, and
the management device comprises:
product information storage means for storing product information;
extraction means for extracting a product candidate to which the learning image is to be added by referencing the product information storage means based on the image of the product captured by the capture means; and
registration means for registering the image of the product captured by the capture means as the learning image in the product information storage means in association with the product designated by the designation reception means.

7. A computer program that causes a computer to execute:
a capture process that captures a product;
an extraction process that extracts a product candidate to which a learning image is to be added by referencing product information storage means for storing product information based on an image of the product captured by the capture means;
a designation reception process that receives a designation of a product to which the learning image is to be added and registered from the product candidates extracted by the extraction process; and
a registration process that registers the image of the product captured by the capture means as the learning image in the product information storage means in association with the product designated in the designation reception process.

8. A computer program that, in a system configured to be capable of communication between an information processing device and a higher-level management device via a network: causes the information processing device to execute:
a capture process that captures a product; and
a designation reception process that receives a designation of a product to which a learning image is to be added and registered from product candidates to which an image of the product captured by the capture process is added as the learning image, and
causes the management device to execute:
an extraction process for extracting a product candidate to which the learning image is to be added by referencing product information storage means for storing product information based on the image of the product captured by the capture means; and
a registration process that registers the image of the product captured by the capture process as the learning image in the product information storage means in association with the product designated by the designation reception process.

9. An information processing device comprising:
capture means for capturing a product;
extraction means for extracting product candidates corresponding to an image of the product captured by the capture means by referencing product information storage means that store product information based on the image of the product captured by the capture means in a predetermined operation mode in which an operation for purchasing the product is performed; and
setting means for setting the product extracted by the extraction means in the predetermined operation mode as a for-sale product or a not-for-sale product.

10. The information processing device according to claim 9 further comprising display control means for displaying an operation element for performing a setting using the setting means for each product extracted by the extraction means as the product candidates, wherein the display control means vary a display aspect of the operation element depending on whether the product is set as the for-sale product or the not-for-sale product.

11. The information processing device according to claim 9 further comprising the predetermined operation mode and a product information maintenance mode, wherein the extraction means:
extract the product candidate from the products set as the for-sale products in the predetermined operation mode; and
extract the product candidate from the products set as the for-sale products and the products set as the not-for-sale products in the maintenance mode.

12. The information processing device according to claim 11, wherein the extraction means, in the predetermined operation mode, when it is not possible to extract the product candidate from the products set as the for-sale products, extract the product candidate from the products set as the not-for-sale products and output to that effect.

13. The information processing device according to any one of claim 9 to claim 12, wherein the extraction means reference the product information storage means to set a learning image associated with the product as a standard image, and extract the product candidate corresponding to the image of the product captured by the capture means, as well as exclude from extraction targets a product not associated with the learning image among the for-sale products and the not-for-sale products.

14. An information processing system configured to be capable of communication between an information processing device and a higher-level management device via a network, wherein:
the information processing device comprises capture means for capturing a product; and
the management device comprises:
product information storage means for storing product information;
extraction means for extracting product candidates corresponding to an image of the product captured by the capture means by referencing product information storage means that store product information based on the image of the product captured by the capture means in a predetermined operation mode in which an operation for purchasing the product is performed; and
setting means for setting the product extracted by the extraction means in the predetermined operation mode as a for-sale product or a not-for-sale product.

15. A computer program that causes a computer to execute:
a capture process that captures a product;
an extraction process that extracts product candidates corresponding to an image of the product captured by the capture means by referencing product information storage means that store product information based on the image of the product captured by the capture means in a predetermined operation mode in which an operation for purchasing the product is performed; and
a setting process that sets the product extracted by the extraction means in the predetermined operation mode as a for-sale product or a not-for-sale product.

16. A computer program that, in a system configured to be capable of communication between an information processing device and a higher-level management device via a network:
causes the information processing device to execute a capture process that captures a product; and
causes the management device to execute:
an extraction process that extracts product candidates corresponding to an image of the product captured by the capture process by referencing product information storage means that store product information based on the image of the product captured by the capture process in a predetermined operation mode in which an operation for purchasing the product is performed; and
a setting process that sets the product extracted by the extraction process in the predetermined operation mode as a for-sale product or a not-for-sale product.
